# EUROPÄISCHE PATENTANMELDUNG

(11) **EP 2 436 622 A2**
(43) Veröffentlichungstag der Anmeldung: **04.04.2012**
(21) Anmeldenummer: 11192017.9
(22) Anmeldetag: 04.12.2006
(51) Int. Cl.: B65G 1/06, A47F 10/02, B65G 1/04, B65G 47/51

(54) **Einzelhandelsversorgungssystem**

(30) Priorität: 07.12.2005 DE 102005058478; 07.12.2005 US 748299 P
(62) Teilanmeldung aus: 06125356.3
(71) Anmelder: Winkler, Walter, 92711 Parkstein (DE)
(72) Erfinder: Winkler, Walter, 92711 Parkstein (DE)
(74) Vertreter: Lang, Christian

(57) **Zusammenfassung**

Die vorliegende Erfindung betrifft ein automatisches System zur Versorgung von Verkaufsregalen in Einzelhandelsgeschäften mit Nachschub, wobei neben einer entsprechenden erfindungsgemäßen Vorrichtung (3,4,5,6,7,) zum Transport der Waren ein Verkaufsregal (12) zur Lagerung und Präsentation der Waren, ein Regalversorgungsfahrzeug (15) und eine Umpackstation zum Umpacken der Waren von Transport- in Präsentationsbehälter sowie entsprechende Verfahren zum Betrieb dieser Vorrichtungen von der vorliegenden Erfindung umfasst sind.

## Beschreibung

### HINTERGRUND DER ERFINDUNG

### GEBIET DER ERFINDUNG

Die vorliegende Erfindung betrifft eine Vorrichtung zum Transport von Verkaufsware in ein und/oder in einem Verkaufsregal sowie ein Verfahren zum Betrieb derartiger Vorrichtungen.

### STAND DER TECHNIK

Im Einzelhandel müssen eine Vielzahl von Waren, die von Zulieferern oder zentralen Verteilzentren angeliefert werden, im Einzelhandelsgeschäft in die Verkaufsregale einsortiert werden, wo sie dann für den Abverkauf an den Kunden bereit stehen. Dies wird üblicherweise rein manuell durch entsprechendes Personal in den Einzelhandelsgeschäften erledigt.

Neben dem Nachbefüllen der Verkaufsregale mit neuer Ware ist es in den Einzelhandelsgeschäften vor allem auch notwendig, die Waren von Zeit zu Zeit, wenn einzelne Waren verkauft worden sind, an die Verkaufsfront nachzuschieben, um einen aufgeräumten und positiven Gesamteindruck für die Käufer zu vermitteln. Insbesondere bei Einzelhandelsgeschäften mit höherwertigen Waren und/oder Service ist es für die anspruchsvolle Kundschaft besonders wichtig ein verkaufsförderndes Ambiente zu schaffen. Hierzu gehört unabdingbar das Nachschieben bzw. Nachführen von in den Regalen gelagerter Ware an die vorderste Stelle der Verkaufsfront, um dem Kunden den Eindruck zu vermitteln, dass er aus einem neuen, frischen und vollständigem Angebot auswählen kann, ohne sich mit ausgesuchter oder übrig gebliebener Ware zufrieden geben zu müssen. Aus diesem Grund ist in manchen Einzelhandelsgeschäften, wie Supermärkten und dergleichen mehr als ein Drittel des Verkaufspersonals damit beschäftigt, die durch abverkaufte Ware entstandenen Lücken in den Verkaufsregalen zu füllen oder zu schließen.

Daneben muss das Verkaufspersonal auch die nachgelieferte Ware in die Regale nachfüllen.

Dazu müssen die meist durch LKWs angelieferten Waren zunächst aus den Verpackungen, beispielsweise Kartons ausgepackt, zu den entsprechenden Regalen transportiert und dort in die entsprechenden Verkaufsfächer einsortiert werden. Dies stellt einen erheblichen Aufwand dar.

Besonders aufwändig ist es, diejenigen Waren, die beispielsweise ein früher ablaufendes Verfallsdatum aufweisen, immer an der Vorderseite bereit zu stellen. Da nachgelieferte Ware üblicherweise ebenfalls von der Vorderseite in das Regal einsortiert wird und diese Ware mit einem späteren Verfallsdatum somit in den hinteren Bereich des Regals einsortiert werden muss, ist es notwenig sämtliche im Regal befindlichen Waren zuerst zu entnehmen, die nachgelieferte Ware in den hinteren Bereich des Regals einzuräumen und dann wiederum die Ware mit dem früheren Verfallsdatum im Bereich der Vorderseite anzuordnen.

Sowohl das reine Nachführen der Ware an die Vorderseite des Regals als auch das Umsortieren entsprechend den Verfallsdaten führt zu einem erheblichen Aufwand, der bisher rein manuell durch Personal erledigt werden muss.

### AUFGABE DER ERFINDUNG

Es ist deshalb Aufgabe der vorliegenden Erfindung die oben geschilderten Nachteile der bisherigen Verfahrensweise für das Nachführen von Waren an die Verkaufsfront in Regalen und/oder für die Nachschubversorgung von Einzelhandelsgeschäften zu beseitigen und ein Verkaufsregal sowie insgesamt ein Logistikkonzept bzw. Nachschubsystem mit entsprechenden geeigneten Komponenten bereitzustellen, welches eine einfache Versorgung von Einzelhandelsunternehmen mit Verkaufsware bei ansprechender Präsentation der Ware und möglichst geringem Aufwand ermöglicht.

### WESEN DER ERFINDUNG

Diese Aufgabe wird gelöst durch eine Vorrichtung mit den Merkmalen des Anspruchs 1 sowie ein Verfahren zum Betrieb einer derartigen Vorrichtung mit den Merkmalen des Anspruchs 14. Weitere vorteilhafte Ausgestaltungen sind Gegenstand der abhängigen Ansprüche.

Die Erfindung geht aus von der Erkenntnis, dass ein automatisiertes Nachführ- und Nachschubsystem bzw. Logistikkonzept für Einzelhandelsgeschäfte trotz der vielen unterschiedlichen Verkaufsgegenstände in einem derartigen Einzelhandelsgeschäft, wie beispielsweise einem Supermarkt, technisch realisierbar ist.

Grundlage bildet die Erkenntnis, dass das Nachführen von Verkaufsware in einem Verkaufsregal an die Vorder- bzw. Verkaufsseite in einfacher Weise dadurch möglich ist, dass das Verkaufsregal Transportbänder aufweist, auf denen die zu verkaufende Ware gelagert ist, wobei die Transportbänder als Endlosbänder um die Regalböden geschlungen sind und durch eine Bewegung des Transportbandes, bei der der auf dem Regalboden auf der Oberseite angeordnete Bandabschnitt in Richtung der Vorderseite bzw. Verkaufsseite des Verkaufregals bewegt wird, die darauf angeordneten Waren somit in einfacher Weise nachgeführt werden können.

Um zu verhindern, dass die auf dem Transportband angeordneten Waren beim Erreichen der Vorderseite des Verkaufsregals aus dem Regal fallen, ist vorzugsweise an der Verkaufsseite des Verkaufsregals eine Anschlagleiste vorgesehen, die knapp oberhalb des Regalbodens in Form eines schmalen Streifens vorgesehen ist, um im unteren Bereich der Verkaufsware einen Anschlag für diese zu bilden. Die Anschlagleiste ist dabei mit Abstand vom Regalboden so angeordnet, dass zwischen Regalboden und Anschlagleiste ein Spalt gebildet ist, durch den das Transportband hindurchgeführt ist. Wird also das Transportband betätigt, so führt es zunächst die auf dem Transportband befindlichen Waren bis zur Anschlagleiste. Sobald die Waren an der Anschlagleiste anschlagen, gleitet das Transportband zwischen Regalboden und Ware hindurch, wobei die Waren durch die Reibungskraft mit dem Transportband in Richtung der Anschlagleiste gezogen werden und sich dadurch selbst organisierend an der Anschlagleiste anordnen.

Auf der der Verkaufsseite gegenüberliegenden Seite ist vorzugsweise ähnlich der Anschlagleiste eine Absturzsicherung vorgesehen, die bei einem Drücken gegen die in dem Regal befindlichen Waren von der Verkaufsseite einen Absturz an der Rückseite verhindert. Die Absturzsicherung kann ebenfalls als entsprechende Leiste ausgebildet sein, die vorzugsweise zudem bewegbar ausgestaltet ist, um ein Entfernen der Absturzsicherung beim Nachfüllen des Regals von der Rückseite, welches später noch detailliert beschrieben wird, zu ermöglichen. Zugleich kann die Absturzsicherung hierbei ein Übergangselement für die Überbrückung des Spaltes zwischen Regalboden und einem die Waren anliefernden Regalversorgungsfahrzeug bilden.

Insbesondere kann die Absturzsicherung klapp- oder drehbar oder als Rollo oder dergleichen ausgebildet sein. Vorzugsweise ist die Absturzsicherung auch über das später noch beschriebene Regalversorgungsfahrzeug betätigbar.

Das Transportband der Regalböden kann entweder manuell bewegt werden oder durch entsprechende Antriebs- und/oder Hilfsmittel, wie Handkurbeln, die in ein entsprechendes Getriebe einkoppelbar sind, oder elektromotorisch betriebene Kurbeln, in Form von handbetätigten Elektromotoren, wie Bohrmaschinen oder Akkuschraubern oder dergleichen, die ebenfalls in entsprechende Getriebe einkoppelbar sind. Ferner sind auch Antriebe denkbar, die an den Verkaufsregalen angeordnet sind. Hierbei ist es vorstellbar, dass ein Antrieb für eine Vielzahl von Transportbändern vorgesehen ist, der beispielsweise zum Antrieb einzelner oder aller Transportbänder gleichzeitig in entsprechende Getriebe einkoppelbar oder entkoppelbar ist. Darüber hinaus ist es auch vorstellbar, wie weiter unten noch beschrieben wird, dass automatisch betriebene Antriebsvorrichtungen an die entsprechenden Transportbändern heranführbar sind.

Nach einem Aspekt der vorliegenden Erfindung, für den selbständig und in der Kombination mit anderen Aspekten Schutz begehrt wird, ist bei einem Verkaufsregal, welches zwei oder mehrere Regalböden umfasst, von denen mindestens einer, vorzugsweise jeder Regalboden ein oder mehrere Transportbänder aufweist, ein zentraler Antrieb vorgesehen, welcher zentral die Transportbänder des gesamten Verkaufsregals oder einer Baueinheit davon antreibt.

Mit einem derartigen zentralen Antrieb ist es nämlich in vorteilhafter Weise möglich, ein kontinuierliches Nachführen der Verkaufsware in dem Verkaufsregal an die Vorder- bzw. Verkaufsseite in einfacher Weise zu gewährleisten. Insbesondere kann ein derartiger Antrieb kontinuierlich mit einer sehr langsamen Antriebsgeschwindigkeit betrieben werden, so dass für den Kunden die Nachführung der Verkaufsware an die Vorder- bzw. Verkaufsseite kaum sicht- oder feststellbar ist, jedoch tatsächlich eine ständige Nachführung der Ware erfolgt.

Der zentrale Antrieb hält den konstruktiven und betriebsmäßigen Aufwand für ein Verkaufsregal niedrig, obgleich das Regal eine Vielzahl von nebeneinander und/oder übereinander in einem Gestell angeordnete Regalböden mit jeweils ein oder mehreren nebeneinander angeordneten Transportbändern aufweisen kann. Zudem können die Regalböden unterschiedlich ausgebildet und angeordnet sein.

Der zentrale Antrieb umfasst vorzugsweise einen Motor, insbesondere Elektromotor, der eine endlos umlaufende Antriebskette oder einen Antriebsriemen antreibt. Die Antriebskette oder der Antriebsriemen sind über Kopplungseinrichtungen mit den Transportbändern und/oder den ihnen zugeordneten Antriebsmitteln koppelbar, so dass ein mittelbarer oder unmittelbarer Antrieb der Transportbänder erfolgen kann.

Vorzugsweise umfassen die Koppplungseinrichtungen Treibräder, Treibrollen, Zahnräder oder sonstige Getriebe, die mit den Transportbändern direkt und/oder entsprechend an den Transportbändern vorgesehenen Antriebsmitteln zusammenwirken. Derartige Antriebsmittel können beispielsweise Rollen sein, über die die Transportbänder geführt sind. Hier sind jedoch auch andere Realisierungsmöglichkeiten vorstellbar, wie ein unmittelbarer Eingriff der Kopplungseinrichtung in die Transportbänder und Führen der Transportbänder über einfache Gleitelemente.

Vorzugsweise weisen die Transportbänder oder die Ihnen zugeordneten Antriebsmittel vergleichbar zu den Kopplungseinrichtungen auf der Antriebsseite Überleitungsmittel auf, so dass die Transportbänder und/oder der Antriebsmittel selbst wiederum zum Antrieb ein oder mehrerer benachbarter Transportbänder dienen können. Auf diese Weise lassen sich Regale mit einer Vielzahl unterschiedlich angeordneter und gestalteter Regalböden mittels eines zentralen Antriebs angetriebener Transportbänder versehen.

Die Überleitungsmittel können ähnlich den Kopplungseinrichtungen Antriebsräder, Antriebsrollen, Zahnräder oder sonstige Getriebe sowie endlos umlaufende Antriebsketten oder Antriebsriemen umfassen.

Vorzugsweise sind die Transportbänder jeweils um zwei parallel angeordnete Rollen geführt, wobei die erste Rolle an der Verkaufsseite des Regals angeordnet ist, während die zweite Rolle an der der Verkaufsseite gegenüberliegenden Rück- oder Innenseite vorgesehen ist. Der Antrieb erfolgt vorzugsweise an der zweiten Rolle oder allgemein dem zweiten Antriebsmittel an der Rück- oder Innenseite des Verkaufsregals. Vorteilhafterweise sind auch die Überleitungsmittel zum Antrieb benachbarter Transportbänder an der zweiten Rolle oder den zweiten Antriebsmitteln an der Rückseite des Verkaufsregals vorgesehen.

Um zusätzlich, neben dem zentralen Antrieb auch einen externen Antrieb, beispielsweise durch manuellen Antrieb der Transportbänder und/oder Antrieb durch ein Regalversorgungsfahrzeug zu ermöglichen, sind vorteilhafterweise der Antrieb und insbesondere die Antriebsmittel und/oder Überleitungsmittel sowie die Transportbänder so ausgestaltet, dass ein Freilauf zumindest einstellbar ist. Dies kann beispielsweise durch eine entsprechende Entkopplung der Antriebskette oder des Antriebsriemens von den Kopplungseinrichtungen realisiert werden.

Vorzugsweise wird jedoch ein dauerhafter Freilauf durch entsprechende Ausgestaltung des Antriebs durch Getriebe und dergleichen, insbesondere in Nachschubrichtung, also in Bewegungsrichtung auf die Verkaufsseite zu, verwirklicht, so dass in Kombination mit dem ebenfalls beschriebenen Regalversorgungsfahrzeug oder manuell ein zusätzliches Nachführen der Ware möglich ist.

Nach einem weiteren Aspekt der vorliegenden Erfindung, für den selbständig und in Kombination mit anderen Aspekten der Erfindung Schutz begehrt wird, ist ein Verkaufsregal vorgesehen, welches mindestens einen Regalboden mit einem Endlostransportband aufweist und verfahrbar ausgebildet ist. Dies hat den Vorteil, dass die Verkaufsregale Platz sparend in einem Ladengeschäft angeordnet werden können, wobei gleichzeitig ein Nachfüllen der Verkaufsregale von der Rückseite möglich ist, so dass das aufwändige Entleeren der Verkaufsregale und Neueinschlichten der Ware eingespart werden kann.

Vorzugsweise sind zwei oder mehr Verkaufsregale zu einem Verkaufsregal bzw. einer Verkaufsregaleinheit zusammengestellt und zwar in der Weise, dass die Verkaufsseiten voneinander weg weisen und die Regale Rücken an Rücken zueinander gestellt sind. Ist nun zumindest eines der Verkaufsregale bzw. ein Teil davon verfahrbar ausgestaltet, so kann zwischen den Verkaufsregalteilen ein Transportweg bzw. eine Nachschubgasse gebildet werden, um die Waren für beide Regalteile von der Rückseite in die Regalböden nachzuführen.

Neben der Möglichkeit nur eines der Verkaufsregale bzw. nur eine Seite oder ein Teil des Verkaufsregals fahrbar auszugestalten, besteht eine weitere Möglichkeit darin, alle Teile bzw. beide Seiten des Verkaufsregals fahrbar auszugestalten, so dass lediglich ein Teil des Verkaufsraums vor jedem Verkaufsregal bzw. vor jeder Verkaufsseite zur Bildung der Nachschubgasse verwendet werden muss.

Vorzugsweise ist mindestens eine Antriebseinrichtung, vorzugsweise für jedes Regalteil eine eigene Antriebseinrichtung zum Verfahren des oder der Regalteile vorgesehen.

Vorzugsweise sind die Transportbänder der Regalböden aus einem Gewebe oder aus einem sonstigen flexiblen Material, wie einer Folie, insbesondere aus Kunststoff, vorzugsweise aus Kunststoffgewebe gebildet. Diese können entsprechend angepasste Oberflächen aufweist, die ein einfaches Gleiten auf dem Regalboden und/oder gleichzeitig einerseits eine Mitnahme der Waren und andererseits ein Gleiten gegenüber den Waren ermöglichen. Insbesondere können die Transportbänder an der Ober- und Unterseite unterschiedliche, auf die verschiedenen Anforderungen abgestimmte Eigenschaften aufweisen.

Darüber hinaus ist es vorteilhaft an den Regalböden, insbesondere den Stirnseiten entsprechende Gleit- und/oder Führungselemente für die Transportbänder insbesondere in Form von Rollen, gebogenen oder abgerundeten Gleitflächen oder dergleichen vorzusehen. Auf diese Weise kann ein einfaches Gleiten der Transportbänder um die Regalböden gewährleistet werden. Insbesondere kann damit auch ein manuelles Verschieben der Transportbänder mit der flachen Hand an die Unterseite der Regalböden gewährleistet werden.

Vorzugsweise ist eine Vielzahl von Regalböden nebeneinander und/oder übereinander in dem Regal bzw. in einem das Regal mit den Regalböden bildenden Gestell vorgesehen, wobei an einem Regalboden ein oder mehrere nebeneinander angeordnete Transportbänder vorgesehen sein können.

Um bei einem automatischen Nachführen der Waren ein seitliches Ausbrechen der Waren zu verhindern, können vorzugsweise seitliche Abtrennungen vorgesehen sein, die das Verkaufsregal in entsprechende Fächer unterteilt. Auch die vertikalen Streben des Regalgestells können hier mit einbezogen werden.

Insbesondere wird jedoch eine flexible Facheinteilung bevorzugt, bei der innerhalb eines durch die Regalstreben vorgegebenen Rastermaßes unterschiedlichste Fächer mit unterschiedlichen Transportbändern und/oder einer variablen Transportbänderanzahl eingerichtet sind.

Nach einem weiteren Aspekt für den ebenfalls unabhängig und in Kombination mit anderen Aspekten Schutz beansprucht wird, ist in dem Nachschubsystem ein Regalversorgungsfahrzeug zum Transport von Ware zu einem Regal vorgesehen, welches auf einer Transportfläche die Ware aufnimmt und über einen vorgegebenen Fahrweg automatisch bewegbar ist. Ein derartiges Regalversorgungsfahrzeug zeichnet sich dadurch aus, dass der Transportfläche Handhabungsmittel zugeordnet sind, die dazu dienen die auf der Transportfläche abgestellten Waren parallel zur Transportfläche zu verschieben, so dass die einzelnen Waren und insbesondere sehr viele unterschiedliche Waren von dem Regalversorgungsfahrzeug in das Regal auf den Regalboden überführt werden können. Unterschiedliche Waren bedeuten hierbei, dass bei verschiedenen Transporten unterschiedlichste Waren aufgenommen werden können, wobei beim einzelnen Transport der Transport gleicher Waren bevorzugt wird.

Als Handhabungsmittel können hierbei ein oder mehrere Schieber vorgesehen sein, oder es sind ähnlich zu dem erfindungsgemäßen Verkaufsregal ein oder mehrere Transportbänder vorgesehen, die um die Transportfläche in einer Endlosschleife geschlungen sind.

Entsprechend sind vorzugsweise Gleit- und/oder Führungselemente für die Transportbänder, insbesondere in Form von Rollen, gebogene oder abgerundete Gleitflächen oder dergleichen vorgesehen. Die Transportbänder des Regalversorgungsfahrzeugs können in identischer oder ähnlicher Weise, wie die Transportbänder des Verkaufsregals gestaltet sein.

Darüber hinaus sind vorzugsweise wiederum Antriebsmittel für das oder die Transportbänder vorgesehen, insbesondere in Form einer Antriebsrolle.

Besonders vorteilhaft ist hierbei, dass das Regalversorgungsfahrzeug und das erfindungsgemäße Verkaufsregal so auf einander abgestimmt sein können, dass mit Hilfe der Antriebsmittel für das oder die Transportbänder des Regalversorgungsfahrzeuges auch die Transportbänder des Verkaufsregals angetrieben werden können und zwar beispielsweise mittels eines entsprechenden Antriebsrades, einer Antriebswelle oder einer Antriebsrolle oder einer sonstigen Getriebeeinrichtung, die mit den Transportbändern oder dem dafür vorgesehenen Antrieb der Verkaufsregale zusammenwirken kann. Damit kann der Aufwand durch Einsparung separater Antriebe für das Verkaufsregal gering gehalten werden.

Mit einem derartigen Regalversorgungsfahrzeug ist es insbesondere möglich Ware von der Rückseite in ein Verkaufsregal nachzuführen. Insbesondere in Verbindung mit einem erfindungsgemäßen Verkaufsregals mit Transportbändern ist es möglich die Ware durch ein erfindungsgemäßes Regalversorgungsfahrzeug von hinten an das Regal heran zu fahren, durch Antrieb des Transportbandes des Regalversorgungsfahrzeuges die Waren von dem Regalversorgungsfahrzeug in Richtung des Regals zu bewegen, gleichzeitig das Transportband des Regals anzutreiben und die dort aufgenommenen Waren an die Vorderseite des Regals nachzuführen und das Regal von hinten mit neuen Waren aufzufüllen. Dadurch werden zeitraubende und arbeitsintensive Tätigkeiten durch einen voll automatisierten Prozess ersetzt, so dass der Aufwand für das Befüllen der Regale deutlich reduziert wird.

Am Übergang zwischen dem Transportband des Regalversorgungsfahrzeuges und dem Transportband des Verkaufsregals kann vorzugsweise ein Übergangselement am Regalversorgungsfahrzeug vorgesehen sein, welches die Lücke zwischen den beiden Transportbändern überbrückt. Alternativ können die beiden Transportbänder auch so geführt sein, dass sie nahezu lückenlos nebeneinander bzw. hintereinander vorgesehen sind.

Durch das gleichzeitige Antreiben des Transportbandes auf dem Regalversorgungsfahrzeug und des Transportbandes im Verkaufsregal ist auch eine Synchronisation der Geschwindigkeit der Transportbänder gewährleistet.

Das Regalversorgungsfahrzeug weist vorzugsweise entsprechende Bewegungsmittel, wie Laufräder und/oder Stützräder zum Zusammenwirken mit einer Fahrschiene oder sonstige Bewegungsmittel auf, die eine Bewegung entlang eines vorgeschriebenen Fahrwegs ermöglichen.

Darüber hinaus sind vorzugsweise an dem Regalversorgungsfahrzeug Antriebsmittel vorgesehen, die eine selbstständige Bewegung des Regalversorgungsfahrzeuges ermöglichen. Alternativ kann der Antrieb auch im Fahrweg integriert sein, wie beispielsweise ein Zugseil oder eine Zugkette.

Nach einer bevorzugten Ausführungsform weist das Regalversorgungsfahrzeug ein zweiteiliges Gestell auf, wobei der obere Teil beispielsweise als Fahreinheit mit den Bewegungs- und Antriebsmitteln als hängendes Schienenfahrzeug an einer Schiene angeordnet ist, während das Unterteil die Transportfläche und die Handhabungsmittel für die Waren bereit stellt. Die Zweiteilung des Gestells des Regalversorgungsfahrzeuges in ein Oberteil und ein Unterteil hat den Vorteil, dass diese beweglich zueinander ausgestaltet sein können, beispielsweise in Form einer Seil-, Gurt- oder Riemenaufhängung. Dies hat wiederum den Vorteil, wie später noch erläutert wird, dass ein einfaches Anfahren der Regalfächer bzw. -böden am Verkaufsregal und gleichzeitig ein ungehinderter Transport beispielsweise an der Decke eines Verkaufsraums möglich ist.

Vorzugsweise weisen die Handhabungsmittel, die Antriebsmittel oder sonstige bewegbare Komponenten einen Antrieb in Form eines Elektromotors auf. Die Stromversorgung kann hierbei über entsprechende Stromschienen am Transportweg sichergestellt werden.

Vorzugsweise weist die Transportfläche umlaufend eine Sicherung der Waren in Form von Seitenwänden und/oder eines Deckelelements auf, so dass die Waren beim Transport vor dem Herab- und Umfallen gesichert sind. Insbesondere kann hierbei der der Transportfläche gegenüberliegende Sicherungsdeckel verfahrbar und/oder geteilt ausgestaltet sein, so dass unterschiedlich hohe Waren aufgenommen und gesichert werden können. Bei einer bevorzugten Ausführungsform kann der Sicherungsdeckel so gestaltet sein, dass dieser beim Zusammenfahren von Ober- und Unterteil automatisch gegen die Waren geführt wird und diese durch Einklemmen mit einer auf einen Maximalwert begrenzten Kraft zusätzlich sichert.

Nach einer bevorzugten Ausführungsform weist der Deckel aus Aluminium oder Kunststoff an seiner Unterseite einen elastischen Stoff, wie Schaumstoff oder dergleichen auf, welcher im klemmenden Kontakt mit den Waren diese sicher hält. Zum Klemmen ist hierbei vorzugsweise die Schwerkraft des Deckels ausreichend.

Vorzugsweise sind an dem Regalversorgungsfahrzeug Abstützelemente zum insbesondere seitlichen Abstützen gegenüber Wänden, Regalen oder dergleichen vorgesehen, und zwar insbesondere bei der Übergabe der Ware an ein Regal, so dass das Regalversorgungsfahrzeug bzw. die Transportfläche während der Übergabe festgestellt, insbesondere in horizontaler Richtung festgestellt ist. Hier ist es insbesondere vorteilhaft, wenn die Abstützelemente beweglich ausgebildet sind, um sie beispielsweise teleskopartig gegen entsprechende Wände, Regale oder dergleichen zu fahren. Besonders vorteilhaft ist es bei einander gegenüber stehenden Regalen, die zwischen sich eine Transportgasse für das Regalversorgungsfahrzeug bilden die Abstützelemente so auszubilden, dass das Regalversorgungsfahrzeug sich gegenüber bzw. zwischen den Regalen einklemmen kann.

Darüber hinaus können auch die Transportfläche und/oder die Handhabungsmittel gegenüber dem Gestell des Regalversorgungsfahrzeugs oder gegenüber den Bewegungsmitteln, also beispielsweise der Schiene, in der das Regalversorgungsfahrzeug beweglich gelagert ist, verschiebbar ausgebildet sein, um ein Heranfahren der Transportfläche und/oder der Handhabungsmittel aus dem Transportweg in Richtung des Regals zu ermöglichen.

Nach einem dritten Aspekt, für den ebenfalls unabhängig Schutz beansprucht wird, und in der die bisher beschriebenen Komponenten wie Verkaufsregal und Regalversorgungsfahrzeug integriert sein können, ist eine Vorrichtung zum Transport von Verkaufsware in ein Verkaufsregal vorgesehen, bei welcher ein Regalversorgungsfahrzeug auf einem Transportweg verfahrbar ist und die Waren automatisch zu einem oder mehreren Verkaufsregalen transportiert und an diese übergibt.

Insbesondere kann dies durch die vorher beschriebenen Regalversorgungsfahrzeuge in Zusammenwirken mit den ebenfalls vorher beschriebenen Verkaufsregalen erfolgen.

Die erfindungsgemäße Vorrichtung weist vorzugsweise einen Transportweg in Form von einem oder mehreren Transportschleifen, die insbesondere als Endlosschleifen ausgebildet sind, auf, wobei die einzelnen Schleifen durch entsprechende Übergabestellen für die Waren miteinander verbunden sind.

In den Transportschleifen können unterschiedliche Transportfahrzeuge oder -systeme, wie Rollen- oder Kettenförderer oder dergleichen eingesetzt werden, so dass auch unterschiedliche Übergabestellen realisiert werden können. Vorzugsweise weist jede der Transportschleifen mindestens ein oder mehrere dieser Transportschleife zugeordnete Transportfahrzeuge auf, wobei in den Regalversorgungsschleifen, die zu oder entlang der Verkaufsregal geführt werden vorzugsweise das vorher beschriebene erfindungsgemäße Regalversorgungsfahrzeug eingesetzt wird.

Der Transportweg erstreckt sich vorzugsweise von einem Anlieferbereich, bei dem die Ware durch LKWs angeliefert wird und/oder einem automatisierten Kleinteilelager (AKL), zu den Verkaufsregalen, wobei insbesondere die Regalversorgungsschleifen in Endlosschleifen durch die Verkaufsregale hindurch geführt sind.

Die Verkaufsregale sind bezüglich des Transportweges vorzugsweise so angeordnet, dass sie zwischen sich eine Transportweggasse bzw. Versorgungsgasse bilden, durch welche hindurch die Regalversorgungsfahrzeuge fahren können. Die Bestückung der Verkaufsregale erfolgt dann von der Rückseite der Verkaufsregale bzw. von der Transportweggasse bzw. Versorgungsgasse aus.

Bei den verfahrbaren Verkaufsregalen bzw. den teilweise verfahrbaren Verkaufsregalen kann die Versorgungsgasse bzw. der Transportweg durch das Verfahren des Regals bzw. eines Teils eines Regals gebildet werden, so dass der Platzbedarf für die gesamte Vorrichtung kleiner ist.

Insbesondere kann die Versorgung der Verkaufsregale zu verkaufsschwachen Zeiten oder nach Geschäftsschluss erfolgen.

Wie bereits vorher beschrieben, sind die Regalversorgungsfahrzeuge und die Verkaufsregale derart aufeinander abgestimmt, dass eine automatische Beladung und/oder ein automatisches Nachführen der Waren in den Regalen an die Verkaufsseite durch das Regalversorgungsfahrzeug erfolgen kann.

Zum Zwischenpuffern von Waren ist an dem Transportweg auch vorzugsweise mindestens ein Zwischenlager vorgesehen, in dem Ware zwischengelagert werden kann. Ein Zwischenlager kann beispielsweise auch oberhalb der Verkaufsregale angeordnet werden.

Zusätzlich können Vorrats- und/oder Bereitstellungsregale vorgesehen sein, die von dem Regalversorgungsfahrzeug ebenfalls automatisch versorgt oder beladen werden können und die Ware, die nicht in Regalen verkauft wird, sondern auf Verkaufstischen, wie Obst und Gemüse, für die Mitarbeiter zur weiteren Verarbeitung bereit stellt.

Mit der erfindungsgemäßen Vorrichtung bzw. dem Regalversorgungsfahrzeug können die Waren unmittelbar einzeln gehandhabt werden oder es können Transport- und/oder Präsentationsbehälter vorgesehen werden, in denen die Waren zusammengefasst sind.

Vorzugsweise weist die erfindungsgemäße Vorrichtung mindestens eine Steuer- und/oder Regelungseinheit auf, die die gesamte Vorrichtung, insbesondere die Beladung der Regalversorgungsfahrzeuge, die Bewegung der Regalversorgungsfahrzeuge, ihre Entladung und die Beladung der Regale und/oder das Nachführen der Waren in den Regalen steuert bzw. regelt.

Insbesondere ist es möglich einen vollautomatischen Betrieb für den Nachschub und/oder das Nachführen der Waren an eine Verkaufsseite des Regals zu installieren. Dies kann beispielsweise dadurch erfolgen, dass eine oder mehrere Erfassungseinheiten, insbesondere Scanner oder Kameras vorgesehen sind, die die Art, die Menge und/oder die Position der Waren insbesondere in den Regalen erfassen und insbesondere an die Steuer- und/oder Regelungseinheiten übermitteln. Der oder die Scanner oder Kameras können dabei vorzugsweise an einem Regalversorgungsfahrzeug vorgesehen sein oder unabhängig entlang der Verkaufs- oder Vorratsregale verfahrbar sein. Insbesondere können auch die Daten der Kassen über die Anzahl und die Art der verkauften Waren mit heran gezogen werden, um den Nachschub der Waren zu organisieren.

Vorzugsweise können auch Entpackstationen für die angelieferten Waren mit integriert sein, die ein automatisches Entpacken beispielsweise aus standardisierten Transportbehältern ermöglichen.

Bei Verwendung von Präsentationsbehältern in den Regalen, kann zusätzlich ein Umpacken der angelieferten Waren erforderlich sein, so dass zusätzlich auch eine oder mehrere Umpackstationen mit integriert sein können.

Eine derartige Umpackstation weist nach einem weiteren Aspekt der vorliegenden Erfindung, für den ebenfalls unabhängig Schutz begehrt wird, ein Wendemodul auf, mit dem ein Transport- und/oder Präsentationsbehälter auf den Kopf gestellt werden kann, so dass die Waren auf einer Auflage zum Liegen kommen und der Behälter in einfacher Weise entfernt bzw. getauscht werden kann.

Vorzugsweise sind bei dem Wendemodul entsprechende Aufnahmen für den Behälter und verstellbare Auflagen, die ein Heranfahren der Auflage an die aufzunehmenden Waren ermöglichen, vorgesehen, wobei insbesondere zwei gegenüberliegende Aufnahmen den Vorteil aufweisen, dass zwei Umpackvorgänge gleichzeitig stattfinden können. Dem Wendemodul sind vorzugsweise zwei Transportvorrichtungen für die Zufuhr und Abfuhr der auszutauschenden Behälter zugeordnet.

Nach einem weiteren Aspekt der vorliegenden Erfindung, für den ebenfalls selbstständig Schutz begehrt wird, ist ein Übergabesystem für die Übergabe von losen Waren oder Gegenständen wie Flaschen, Dosen oder dergleichen aus einem Transportbehälter auf eine Abstellfläche, insbesondere die Transportfläche eines Regalversorgungsfahrzeugs vorgesehen. Dieses Übergabesystem, das insbesondere in den Transportweg der vorher beschriebenen Vorrichtung und insbesondere dort in einer Hauptversorgungsschleife mit einem Rollenförderer integriert sein kann, weist einen Transportbehälter auf, der als quaderförmige Tray gestaltet ist, welcher einen doppelten Boden und vier umlaufende niedrige Seitenwände besitzt. Der obere Bodenteil des doppelten Bodens ist frei beweglich bzw. lose in dem Behälter eingelegt, so dass das obere Bodenteil mit dem darauf angeordneten Waren oder Gegenständen in dem Behälter angehoben werden kann. Dies kann beispielsweise durch eine Hubvorrichtung erfolgen, die entsprechende Dorne zum Durchgreifen durch das untere Bodenteil aufweist. Das obere Bodenteil wird hierbei soweit angehoben, dass eine der Hubvorrichtung zugeordnete Schiebeanordnung mit einem Schieber die lose auf dem oberen Bodenteil angeordneten Waren auf eine benachbarte Abstellfläche, beispielsweise die Transportfläche des Regalversorgungsfahrzeugs schieben kann. Um ein Ausbrechen der losen Waren bzw. Gegenstände zu vermeiden, sind am Behälter und/oder der Schiebeanordnung Führungselemente für die zu schiebenden Gegenstände vorgesehen.

Die Führungselemente können entweder als über den Rand des Behälters hervorstehende Seitenwände und/oder als Leisten insbesondere verschiebbar auf dem oberen Bodenteil ausgeführt sein. Alternativ oder zusätzlich können Führungselemente an der Schiebeanordnung insbesondere als verfahrbare Schiebefinger vorgesehen sein, die zwischen oder um die Gegenstände geführt werden, so dass sie beim Schiebevorgang seitlich gehalten sind.

Insgesamt ist mit dem vorgestellten Logistikkonzept auf Basis der einzelnen erfindungsgemäßen Komponenten eine vollautomatisierte Nachschubversorgung eines oder mehrerer Einzelhandelsgeschäfte, wie beispielsweise Supermärkte oder dergleichen, mit einer Vielzahl von verschiedenen Produkten, wie Flaschen, Dosen, Schachteln, und dergleichen möglich. Insbesondere ist auch ein Nachführen der Waren in den Verkaufsregalen an die Vorder- bzw. Verkaufsseite vollautomatisch, beispielsweise insbesondere fortlaufend oder in festen oder flexiblen Zeitintervallen oder auf der Basis des Abverkaufs möglich. Darüber hinaus ermöglichen die einzelnen Komponenten auch bei einer Einzelanwendung eine Vereinfachung einzelner Handhabungsschritte, die früher aufwändig manuell durchgeführt werden mussten.

### KURZBESCHREIBUNG DER FIGUREN

Weitere Vorteile, Kennzeichen und Merkmale der vorliegenden Erfindung werden bei der nachfolgenden Beschreibung von Ausführungsbeispielen anhand der beigefügten Figuren deutlich. Die Figuren zeigen hierbei in rein schematischer Weise in
- Fig.1: eine schematische Draufsicht auf ein Einzelhandelsgeschäft, welches mit der erfindungsgemäßen Vorrichtung ausgestattet ist;
- Fig.2: eine schematische Seitenansicht eines Regalversorgungsfahrzeuges;
- Fig.3: eine schematische Seitenansicht des Regalversorgungsfahrzeuges aus Figur 2 um 90° gedreht;
- Fig.4: eine Ansicht eines Verkaufsregals und eines dazugehörigen Versorgungsfahrzeuges;
- Fig.5: eine Ansicht des Verkaufsregals aus Figur 4 um 90° gedreht;
- Fig.6: eine Schnittansicht durch ein Verkaufsregal mit einer Draufsicht auf die Regalböden;
- Fig.7: eine Seitenansicht einer Beladestation für ein Regalversorgungsfahrzeug;
- Fig.8: die Beladestation aus Figur 7 in einem späteren Prozessschritt des Beladens;
- Fig.9: eine Seitenansicht eines Regalversorgungsfahrzeuges in Transportstellung;
- Fig.10: eine Seitenansicht eines Regalversorgungsfahrzeuges beim Beladen eines Verkaufsregals;
- Fig. 11: die Ansicht aus Figur 10 bei einem späteren Prozessschritt des Entladens des Regalversorgungsfahrzeuges bzw. des Bestückens des Verkaufsregals;
- Fig. 12: einen zusammenklappbaren Transportbehälter;
- Fig. 13: einen Präsentationsbehälter;
- Fig. 14: einen ersten Schritt eines Umpackvorgangs von einem Transportbehälter in einem Präsentationsbehälter in einer Umpackstation;
- Fig. 15: einen zweiten Schritt des Umpackvorgangs aus Figur 14;
- Fig. 16: einen dritten Schritt des Umpackvorgangs gemäß Figur 14;
- Fig. 17: einen vierten Schritt des Umpackvorgangs gemäß Figur 14;
- Fig. 18: eine Draufsicht auf eine weitere Ausführungsform einer erfindungsgemäßen Regalanordnung;
- Fig. 19: eine Seitenansicht eines Verkaufsregals und eines Versorgungsfahrzeugs;
- Fig. 20: eine Seitenansicht des Verkaufsregals und des Verkaufsregals aus Figur 19 in einem anderen Verfahrensschritt;
- Fig. 21: eine Seitenansicht einer weiteren Ausführungsform eines Verkaufsregals und eines Regalversorgungsfahrzeugs beim gegenseitigen Zusammenwirken;
- Fig. 22: eine perspektivische Ansicht eines Teils einer Übergabestation;
- Fig. 23: eine Draufsicht auf eine Übergabestation;
- Fig. 24: eine Seitenansicht einer weiteren Ausführungsform eines Verkaufsregals;
- Fig. 25: eine Seitenansicht einer noch anderen Ausführungsform eines Verkaufsregals;
- Fig. 26: eine perspektivische Teilansicht eines Antriebs für die Transportbänder eines Verkaufsregals;
- Fig. 27: eine Seitenansicht eines auseinander fahrbaren Verkaufsregal im zusammen gefahrenen Zustand; und in
- Fig. 28: eine Seitenansicht des Verkaufsregals aus Fig. 27 im auseinander gefahrenen Zustand.

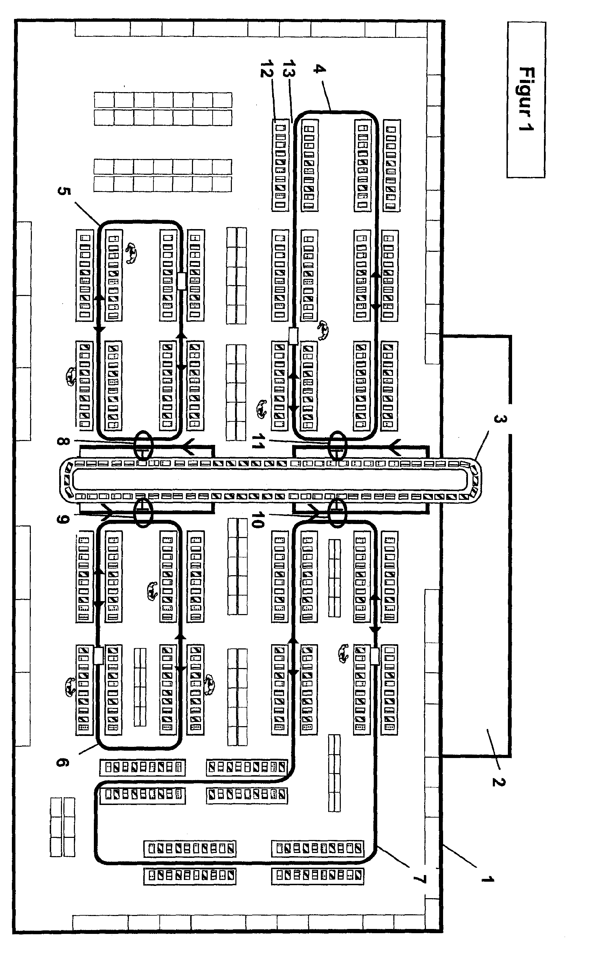

Die Figur 1 zeigt in einer schematischen Draufsicht den Grundriss eines Einzelhandelsgeschäftes 1, beispielsweise eines Supermarktes. An den mit rechteckigem Grundriss versehenen Verkaufsraum schließt sich in der Ansicht der Figur 1 an der Oberseite ein Anlieferbereich 2 an, in dem mit LKWs die zu verkaufenden Waren angeliefert werden. In den Anlieferbereich erstreckt sich eine Hauptversorgungsschleife 3 einer erfindungsgemäßen Transportvorrichtung für den Transport der Waren zu den Verkaufsregalen 12. Im Bereich der Hauptversorgungsschleife 3 kann im Anlieferbereich eine Anlage zum automatischen Depallettieren und Bestücken der Hauptversorgungsschleife 3 vorgesehen sein (nicht gezeigt). In der Hauptversorgungsschleife 3 werden die dort aufgenommenen unterschiedlichen Waren im Kreis bewegt und an den Übergabestationen 8, 9, 10 und 11 an die Regalversorgungsschleifen 4, 5, 6 und 7 übergeben. In den Regalversorgungsschleifen 4, 5, 6, 7 verkehren Regalversorgungsfahrzeuge, die später noch detailliert beschrieben werden. Diese Regalversorgungsfahrzeuge übernehmen die Waren aus der Hauptversorgungsschleife und liefern sie an die entsprechenden Stellen der Verkaufsregale 12. In der Hauptversorgungsschleife 3 können entweder identische Transportfahrzeuge vorgesehen sein, oder es können andere geeignete Transportvorrichtungen, wie Rollenförderer oder dergleichen installiert sein.

Selbstverständlich ist es auch denkbar, nur eine einzige Regalversorgungsschleife vorzusehen, so dass auf die Übergabestationen 8, 9, 10, 11 und die Hauptversorgungsschleife 3 verzichtet werden kann.

Die Regalversorgungsschleifen 4, 5, 6 und 7 sind so gestaltet, dass sie durch eine zwischen jeweils zwei Verkaufsregale 12 gebildeten Versorgungsgasse 13 hindurchgeführt werden können, um die Verkaufsregale von der Hinterseite zu bestücken, während die Kunden, wie ebenfalls schematisch dargestellt, von der Vorderseite bzw. der Verkaufsseite die Waren entnehmen können.

Wie später noch detailliert dargestellt werden wird, können die Regalversorgungsfahrzeuge, die entlang der Regalversorgungsschleifen 4, 5, 6 und 7 bewegt werden, vorteilhafterweise neben der Funktion der Bestückung der Verkaufsregale 12 zusätzlich die Funktion übernehmen, die Waren in den Verkaufsregalen 12 an die Vorderseite der Verkaufsregale nachzuschieben bzw. nachzurücken.

Wie der schematische Plan des Einzelhandelsgeschäfts 1 der Figur 1 zeigt, können zusätzlich zu den Verkaufsregalen 12, die an die erfindungsgemäße Transport- oder Versorgungsvorrichtung angeschlossen sind, zusätzliche Verkaufsregale vorgesehen sein, die beispielsweise Waren aufnehmen, die für die automatische Bestückung der Regale nicht geeignet sind, wie beispielsweise Frischobst.

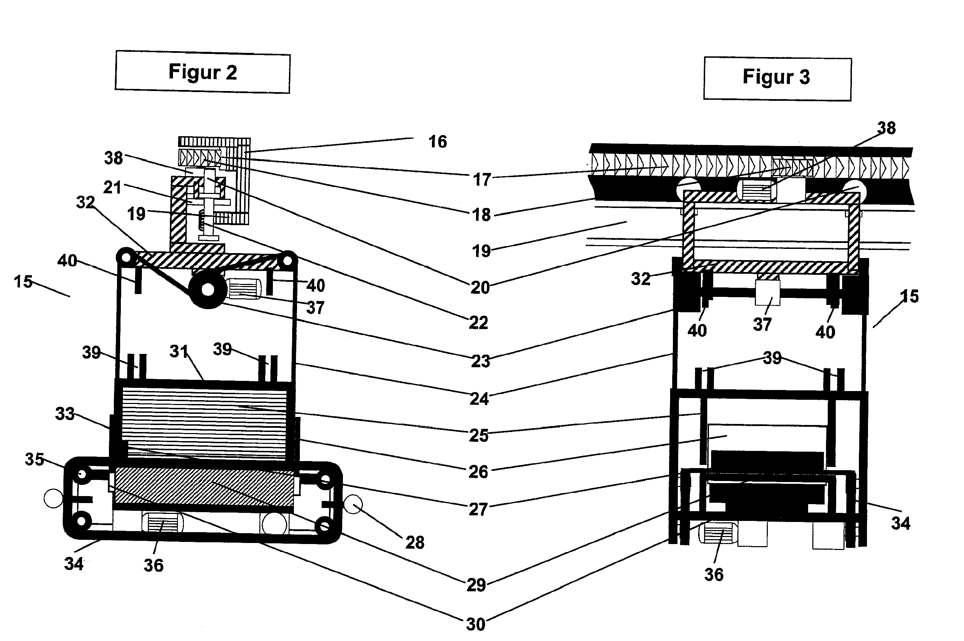

Die Figuren 2 und 3 zeigen in 90° zueinander verdrehten Seitenansichten ein erfindungsgemäßes Regalversorgungsfahrzeug 15, welches entlang der Regalversorgungsschleifen 4, 5, 6 und 7 der Figur 1 bewegbar ist.

Das Regalversorgungsfahrzeug 15 ist über zwei Laufräder 20 und seitlich davon angeordnete Führungsräder 21 fahrbar an einer Fahrschiene 19 angeordnet, welche wiederum über eine Deckenaufhängung 16 beispielsweise an einer Gebäudedecke angeordnet sein kann. An der Fahrschiene sind zusätzlich Stromschienen 22 zur Energieversorgung des Regalversorgungsfahrzeuges 15 über berührungslose induktive Stromabnahmer oder über Schleifkontakte vorgesehen.

Ferner ist an der Deckenaufhängung 16 ein Zahnriemen 17 angeordnet, welcher in Eingriff mit einer Antriebsriemenscheibe 18 steht, die durch einen Elektromotor 38 angetrieben wird und somit das Regalversorgungsfahrzeug 15 entlang der Fahrschiene 19 verfahren kann.

Antriebsriemenscheibe 18, Elektromotor 38, Laufräder 20 und Stützräder 21 sind an einem oberen Gestellteil 32 des Regalsversorgungsfahrzeuges 15 angeordnet.

An diesem oberen Gestellteil 32 des Regalversorgungsfahrzeuges 15 sind ferner zwei Gurtwickeltrommeln 23 vorgesehen, die über ein Getriebe von einem Elektromotor 37 angetrieben werden. Die Gurtwickeltrommeln 23 können Gurte 24 auf- und abwickeln, welche das untere Gestellteil 33 des Regalversorgungsfahrzeuges hängend tragen. Auf diese Weise ist es möglich oberes Gestellteil 32 und unteres Gestellteil 33 in Bezug zueinander zu bewegen.

Das untere Gestellteil 33 weist einen Produktauflagetisch 29 auf, auf dem die zu transportierenden Waren gelagert werden. Zur Absicherung der Waren beim Transport sind an zwei Seiten Produktseitenwände 25 und an den übrigen Seiten zwei Transportsicherungsklappen 26 vorgesehen. Darüber hinaus ist der Lagerbereich für die Waren auf dem Produktauflagetisch 29 des Regalversorgungsfahrzeuges 15 über einen Deckel 31 abgeschlossen, der an seiner Oberseite zwei Buchsen 39 aufweist, in die Stifte 40 vom oberen Gestell 32 des Regalversorgungsfahrzeuges 15 eingreifen können. Der Deckel kann an seiner Unterseite elastisches Material, insbesondere Schaumstoff aufweisen, welcher in Kontakt mit den aufgenommenen Waren, wie z.B. Flaschen diese sicher hält.

Oberhalb des Produktauflagetisches ist ein Produktschieber 27 vorgesehen, der über eine Riemenanordnung 34 entlang der Oberseite des Produktauflagetisches 29 verfahrbar ist. Hierzu muss nur der Riemen 34 über die Rollen 35 bewegt werden. Zum Antrieb ist ein Elektromotor 36 vorgesehen.

Anstelle des Produktschiebers 27, der mit seitlich geführten Riemen 34 verbunden ist, kann an Stelle der seitlichen Riemen 34 ein durchgehendes Transportband vorgesehen sein, welches sich ebenfalls über die Oberseite des Produktauflagetisches 29 erstreckt. Die Waren sind in diesem Falle auf dem Transportband aufgenommen und durch Antrieb des Transportbandes über eine Antriebsrolle, nämlich eine der Rollen 35 kann das Transportband, welches in einer Art Endlosschleife vorgesehen ist, bewegt werden, um ähnlich der Schiebeoperation des Produktschiebers 27 die Waren über den Produktauflagetisch zu schieben bzw. zu bewegen, und zwar gemäß der Figur 2 von links nach rechts oder auch bei umgekehrten Antrieb der entsprechenden Antriebsrolle 35 in umgekehrter Richtung. Damit ist sowohl ein Be- als auch ein Entladen der Regale mit den Regalversorgungsfahrzeugen möglich. Dies ist insbesondere wichtig, wenn im Bereich der Verkaufsregale, beispielsweise oberhalb eines für den Kunden zugänglichen Bereichs Zwischenlager für die Waren vorgesehen sind. Somit kann dann mit dem Regalversorgungsfahrzeug nicht nur das Verkaufsregal bestückt, sondern auch das Zwischenlager be- und entladen werden.

Darüber hinaus ist die zweiseitige Verschieberichtung für die auf dem Produktauflagetisch 29 aufgenommenen Waren auch deshalb von Bedeutung, weil das Regalversorgungsfahrzeug, welches sich durch die Versorgungsgasse 13 (siehe Figur 1) bewegt, sowohl die Regale links als auch rechts von der Gasse bestücken und versorgen soll.

Entsprechend sind auch beidseitige Abstütz- und/oder Führungsrollen 28 vorgesehen, die zur Abstützung und/oder Führung an den Regalen dienen.

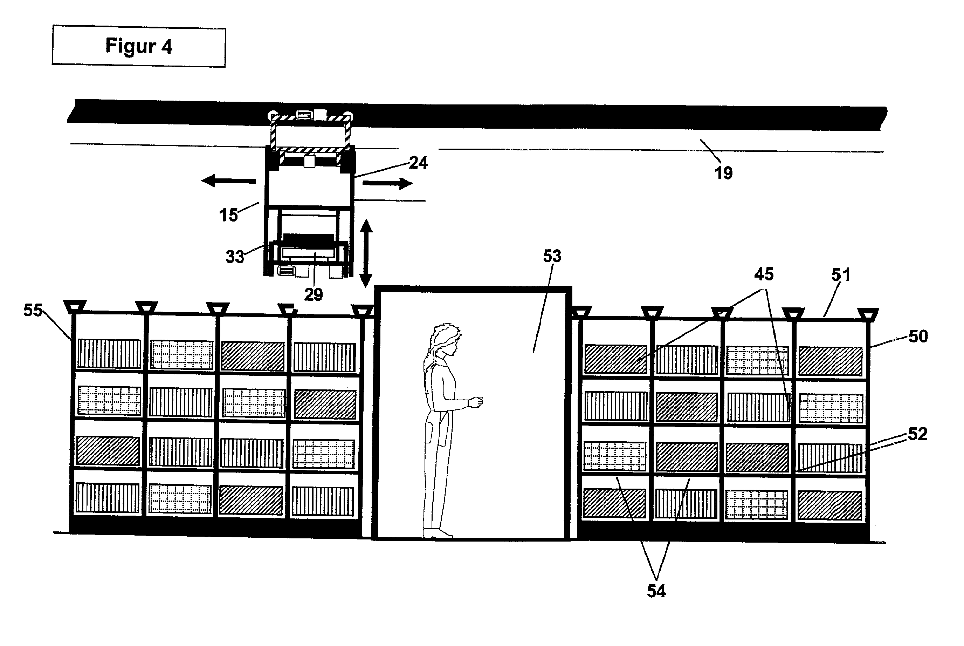

Die Figur 4 zeigt eine Seitenansicht eines Verkaufregals 50, welches mit einem Regalversorgungsfahrzeug 15 automatisch bestückt werden kann.

Das Regal 50 weist eine Vielzahl vertikaler Streben 52 auf, in denen die Regalböden 51 aufgenommen sind, auf denen die Verkaufsartikel 54 gelagert werden können. Das Regalversorgungsfahrzeug 15 kann entlang der Fahrschiene 19, die beispielsweise an der Decke des Verkaufsraumes angeordnet ist, entlang des Verkaufregals 50 verfahren werden, wie die beiden horizontalen Pfeile links und rechts vom Regalversorgungsfahrzeug 15 der Figur 4 zeigen. Darüber hinaus kann das untere Gestellteil 33 des Regalversorgungsfahrzeuges über die Gurtaufhängung 24 nach oben und untern verfahren werden, wie der Doppelpfeil in Figur 4 andeutet. Auf diese Weise kann das Regalversorgungsfahrzeug jedes Fach 54 des Regals 50 anfahren, da durch eine zweidimensionale Bewegung entlang der x- und z-Richtung der Raumkoordinaten der Produktauflagetisch 29 mit jedem Regalboden 51 des Regals 50 ausgerichtet werden kann.

Die vertikale Verfahrbarkeit des unteren Gestellteils 33 des Regalsversorgungsfahrzeuges 15 ist auch deshalb von Bedeutung, weil dadurch sichergestellt werden kann, dass zwischen verschiedenen Regalen, wie beispielsweise den Regalen 50 und 55 der Figur 4 ein Kundendurchgang 53 gewährleistet ist, ohne dass es Kollisionsprobleme mit dem Regalversorgungsfahrzeug geben würde. Das Regalversorgungsfahrzeug 15 kann nämlich durch das hochgezogene untere Gestellteil 33 oberhalb des Kundendurchgangs 53 verfahren werden.

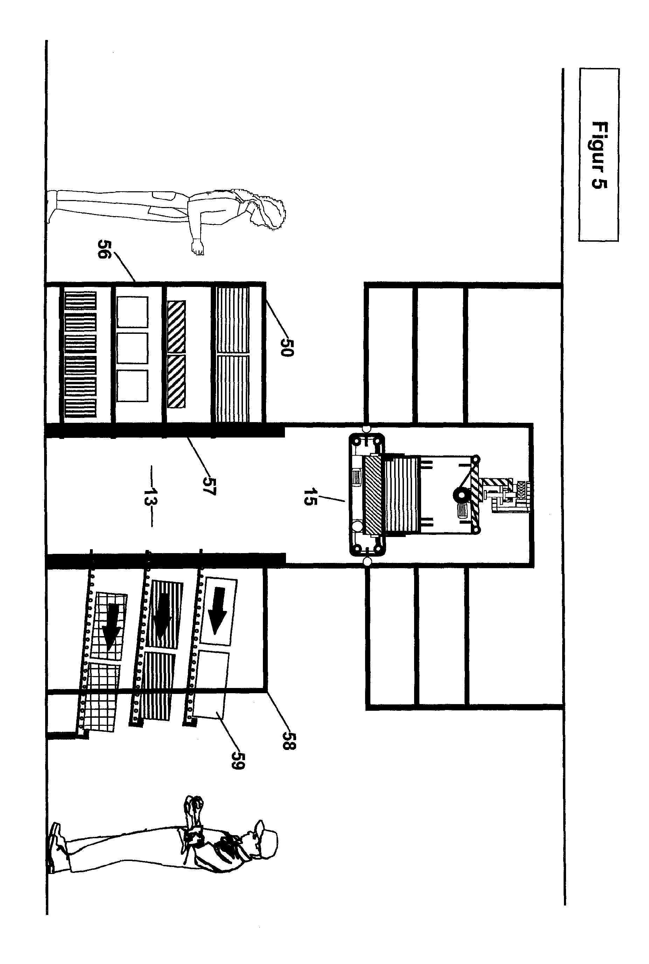

Die Figur 5 zeigt die Verkaufsregalanordnung aus Figur 4 in einer um 90° gedrehten Ansicht.

Hier ist deutlich die Versorgungsgasse 13 zu erkennen, in der das Regalversorgungsfahrzeug 15, welches detailliert in den Figuren 2 und 3 dargestellt worden ist, verfahrbar ist.

Bei dem gezeigten Ausführungsbeispiel ist auf der linken Seite das Verkaufregal 50 mit der Verkaufsseite 56 und der Versorgungsseite 57 dargestellt, während auf der rechten Seite der Versorgungsgasse 13 ein Bereitstellungsregal 58 vorgesehen ist, in dem Waren, welche nicht für die automatische Nachschubversorgung geeignet sind, in Transport- und/oder Präsentationsbehältern 59 für das Einsortieren und Bestücken der Verkaufsstände durch Mitarbeiter bereit gestellt werden. Dies hat den Vorteil, dass die Mitarbeiter die Behälter mit den Verkaufswaren nicht selbst durch das Einzelhandelsgeschäft bewegen müssen, sondern dass die Waren in den Behältern 59 in der Nähe der Verkaufsstände bereitgestellt werden können. Auch die Behälter 59 werden mittels des Regalversorgungsfahrzeuges 15 in das Bereitstellungsregal 58 geliefert.

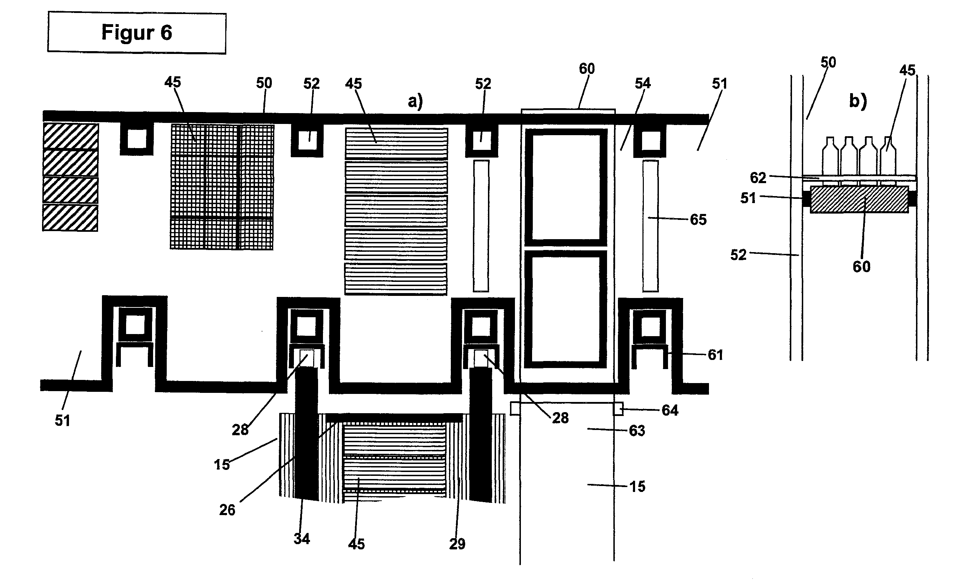

Die Figur 6 zeigt in einem linken Teilbild a) einen horizontalen Schnitt durch ein Verkaufsregal 50, während im rechten Teilbild b) eine Teilansicht von der Verkaufsseite des Regals 50 zu sehen ist.

Gemäß dem horizontalen Schnitt durch das Verkaufsregallager 50 ist in einer Draufsicht ein Regalboden 51 zu sehen, welcher durch die vertikalen Streben 52 gelagert ist. Auf dem Regalboden 51 sind die zu verkaufenden Waren 45 angeordnet.

Die Bestückung erfolgt nun in der Weise, dass von der Rückseite das Regalversorgungsfahrzeug 15 an das Regal 50 heran fährt wobei die Abstütz- und/oder Führungsrollen 28 in die Führungsschienen 61 des Regals eingreifen.

Sobald sich die Transportsicherungsklappe 26 des Regalversorgungsfahrzeuges 15 öffnet, kann durch Antrieb der Riemenanordnung 34 der nicht dargestellte Produktschieber die Verkaufswaren 45 in Richtung des Regals 50 schieben, wobei entweder die aufgeklappte Transportsicherungsklappe 26 oder ein zusätzliches Überbrückungselement die Lücke zwischen dem Regalboden 51 und dem Produktauflagetisch 29 schließt.

Die Figur 6a) zeigt weiterhin ein Regalfach 54, welches mit einem Endlos-Transportband 60 ausgerüstet ist, welches sich um den Regalboden 51 drehbar schlingt.

Wie weiterhin schematisch gezeigt ist, kann hierzu ein Regalversorgungsfahrzeug 15', welches ebenfalls ein Transportband 63 aufweist, das sich auf der Oberseite des Produktauflagetisches 29 erstreckt und in einer Endlosschleife unterhalb des Produktauflagetisches 29 im Kreis geführt ist, vorgesehen sein. Das Transportband 63 kann über die Antriebsrolle 64 in eine Bewegung versetzt werden, so dass der auf dem Produktauflagetisch 29 befindliche Teil des Endlos-Transportbandes 63 in Richtung des Regals 50 oder in die entgegen gesetzte Richtung bewegt wird. Auf diese Weise ist es möglich, die auf dem Transportband 63 des Regalversorgungsfahrzeuges 15' befindlichen Waren in der Richtung des Regalfaches 54 zu transportieren bzw. zu schieben.

Da die Antriebswelle 64 des Transportbandes 63 des Regalsversorgungsfahrzeuges 15' über ein nicht näher dargestelltes Getriebe, vorzugsweise ein Antriebsrad oder eine Antriebswelle gleichzeitig das Transportband 60 des Regalfaches 54 antreibt, können die Waren problemlos von dem Regalversorgungsfahrzeug 15' in das Verkaufsregal 50 übergeben werden. Insbesondere ist es mit einer derartigen erfindungsgemäßen Ausgestaltung des Regalfachs 54 auch möglich, die Verkaufswaren bis an die Vorderseite bzw. Verkaufsseite des Verkaufsregals 50 heranzufahren. Zu diesem Zweck ist, wie in Teilbild b) der Figur 6 dargestellt, an der Vorderseite bzw. Verkaufsseite des Verkaufsregals 50 eine schmale Anschlagleiste 62 vorgesehen, welche die Verkaufswaren 45, beispielsweise die in Figur 6b) dargestellten Flaschen, am Weitertransport hindert, während das Transportband 60 zwischen dem Regalboden 51 und den Waren 45 hindurch rutschen kann. Auf diese Weise ist nicht nur ein einfaches Bestücken des Regals 50 möglich, sondern es kann auch ein automatisches Nachführen der Waren an die Vorderseite bzw. Verkaufsseite des Verkaufsregals 50 erfolgen, wenn Kunden Waren entnommen haben.

Zwar ist dies auch bei einem reinen Schiebevorgang, wie er beispielsweise bei dem Regalversorgungsfahrzeug 15 stattfindet, möglich, wenn an der vorderen Seite des Regals 50 eine entsprechende Anschlagleiste 62 vorgesehen ist. Durch das Weiterfördern des Transportbandes 60 wird jedoch eine selbstorganisierende Anordnung der Waren 45 an der Anschlagleiste erreicht, die bei einem reinen Schiebevorgang nicht möglich wäre.

Darüber hinaus ist das Vorsehen eines Transportbandes in Verbindung mit Regalböden, wie sie in der Figur 6a) für das Fach 54 gezeigt ist, auch deshalb vorteilhaft, weil auch unabhängig von einem Regalversorgungsfahrzeug ein Nachführen der zu verkaufenden Waren an die Verkaufsseite des Regals 50 in einfacher Weise möglich ist, wenn entsprechende Antriebe für das Transportband am Regal 50 vorgesehen sind oder wenn das Transportband 60 manuell ,vorzugsweise über eine entsprechende Getriebevorrichtung, oder mit einer entsprechenden Handmaschine in der Art einer Bohrmaschine oder eines Akkubohrschraubers so bewegt wird, dass die darauf angeordneten Waren an die Vorderseite des Verkaufregals gelangen.

Obwohl in Figur 6a) lediglich ein Fach des Verkaufregals 50 mit einem entsprechenden Transportband 60 dargestellt ist, ist selbstverständlich, dass sämtliche Regalfächer des Regals 50 mit entsprechendem Transportbändern 60 versehen werden können, wobei in einem Fach auch mehrere Transportbänder 60 vorgesehen werden können und die Breite der Transportbänder unterschiedlich sein können. Insofern sind die verschiedenen in Fig. 6 dargestellten Möglichkeiten als alternative Ausführungsformen zu sehen, die nicht unbedingt nebeneinander eingesetzt werden.

Um beim selbstorganisierenden Nachführen der zu verkaufenden Waren an die Verkaufsseite des Verkaufsregals 50 ein Ausbrechen der Waren in benachbarte Fächer zu vermeiden, können vorzugsweise zwischen den Fächern Trennwände 65 vorgesehen sein.

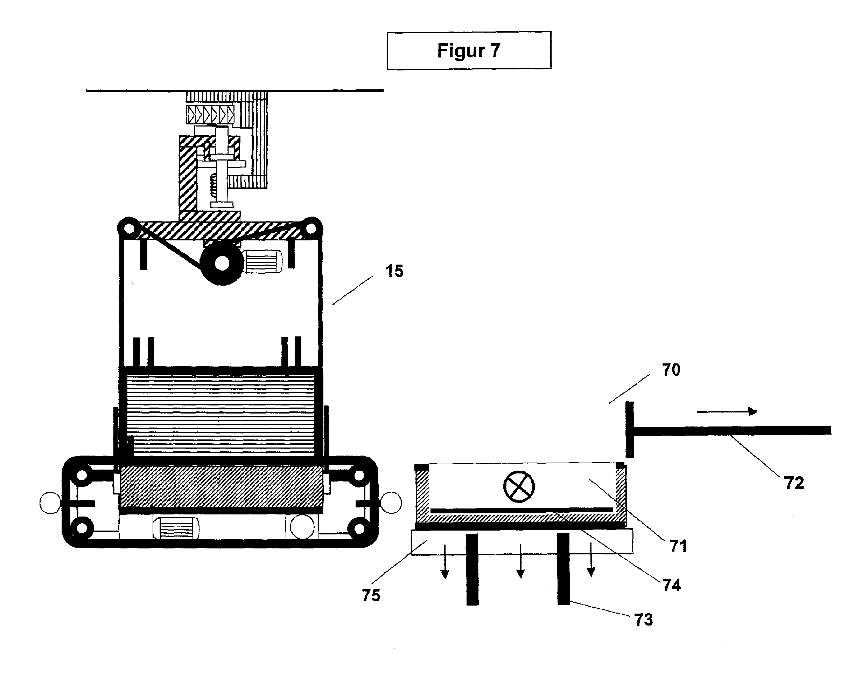

Die Figur 7 zeigt ein Regalversorgungsfahrzeug 15 in einer Beladestation 70.

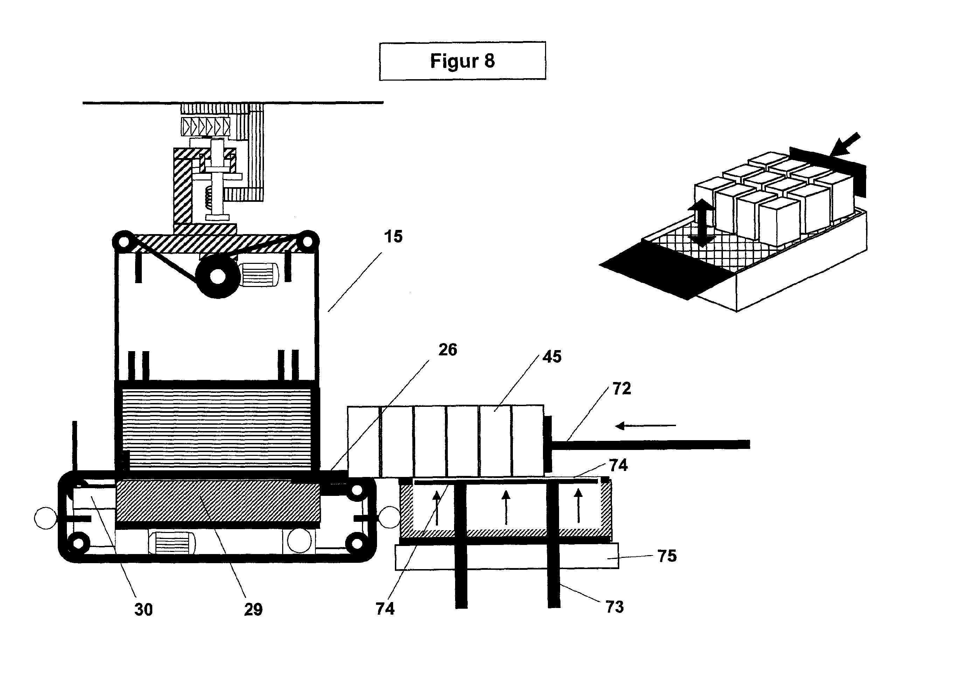

Wie in Figur 7 zu sehen ist, werden die Waren beispielsweise in einem Transportbehälter 71 einem so genannten Nachschubtray angeliefert, der eine schachtelartige Form aufweist und einen zusätzlichen bewegbaren Zwischenboden 74 besitzt, auf dem die Waren angeordnet sind. In der Beladesation 70 für das Regalversorgungsfahrzeug 15 wird der Zwischenboden 74, wie insbesondere auch in der Figur 8 zu sehen ist, über die Aushubleisten 73 nach oben gehoben, so dass der Zwischenboden 74 auf einer Ebene mit der Oberseite des Produktauflagetisches 29 ist, wobei dann das Schiebeelement 72 die Waren 45 auf den Produktauflagetisch 29 des Regalversorgungsfahrzeuges 15 schiebt. Danach kann dann die während des Beladevorgangs geöffnete Transportsicherungsklappe 26 wieder geschlossen werde, so dass die Waren 45 sicher auf dem Regalversorgungsfahrzeug 15 gelagert sind.

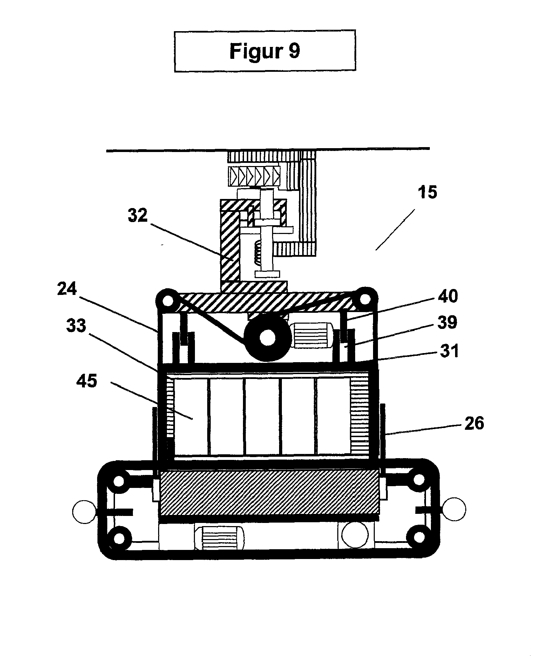

Die Figur 9 zeigt das Regalversorgungsfahrzeug 15 im Transportzustand, bei dem das obere Gestellteil 32 und das untere Gestellteil 33 aufeinander zugefahren und über die Hülsen 39 und die Stifte 40 gegenseitig lagefixiert sind. Der Gurt der Gurtaufhängung 24 ist hier in seiner maximal aufgewickelten Position. In dieser Position ist auch der verschiebbar gelagerte Deckel 31 fest auf den Waren 45 angeordnet, so dass diese allseitig festgehalten werden.

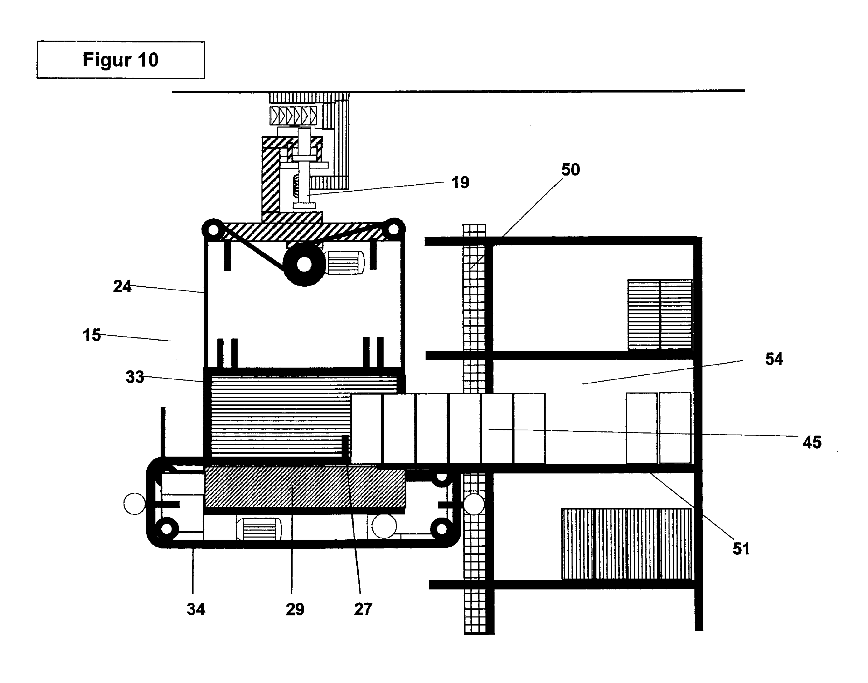

Die Figur 10 zeigt die Entladung des Regalversorgungsfahrzeuges 15. Das Regalversorgungsfahrzeug wird zunächst entlang der Fahrschiene 19 so weit verfahren, dass es der entsprechenden Spalte des zu bestückenden Regalfaches 54 des Verkaufregals gegenüber liegt. Dies bedeutet, dass das Regalversorgungsfahrzeug 15 senkrecht zur Bildebene entlang der Fahrschiene 19 verfahren wird, bis die richtige Position erreicht ist. Anschließend wird über die Gurtaufhängung 24 das untere Gestellteil 33 mit dem Produktauflagetisch 29 so weit in der Höhe verstellt, dass die Oberseite des Produktauflagetisches 29 mit dem Regalboden 51 des entsprechenden Regalfaches 54 fluchtend ausgerichtet ist, so dass der Schieber 27 angetrieben von den Gurten 34 die Waren 45 in das Regal 50 schieben kann.

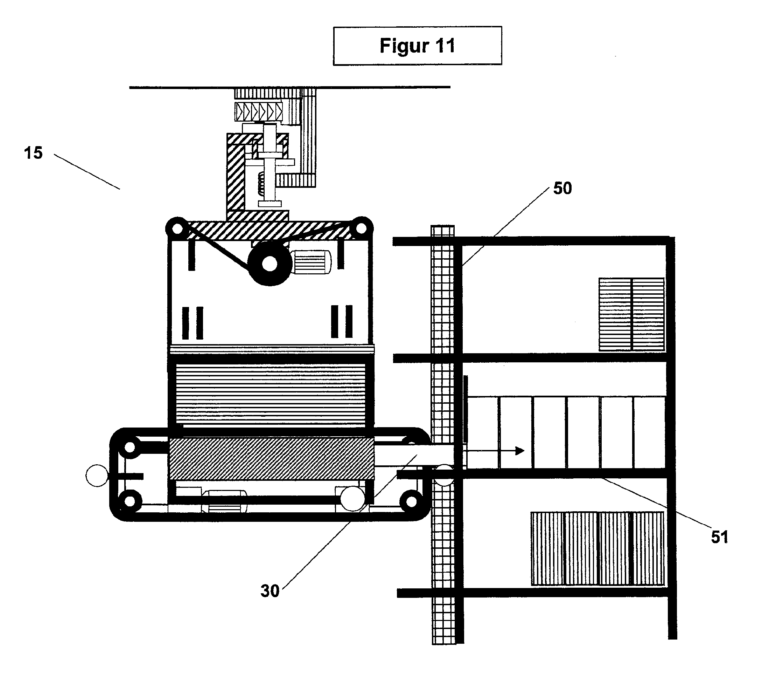

Wie in Figur 11 zu sehen ist, kann die Teleskopgabel 30 dazu verwendet werden, die Waren 45 noch entsprechend weit in das Verkaufregal hinein zu schieben.

Mit dem in der Figur 6 dargestellten alternativen Regalversorgungsfahrzeug 15' würde in Zusammenarbeit mit einem entsprechendem Verkaufsregal, welches mit Transportbändern 60 ausgestattet ist ein derartiges zusätzliches Nachschieben entfallen. Stattdessen können hierbei durch Antrieb der Transportbänder sowohl von Regal als auch vom Regalversorgungsfahrzeug die Waren automatisch in das Regal eingefüllt und an die Verkaufsseite des Regalfaches herangeführt werden.

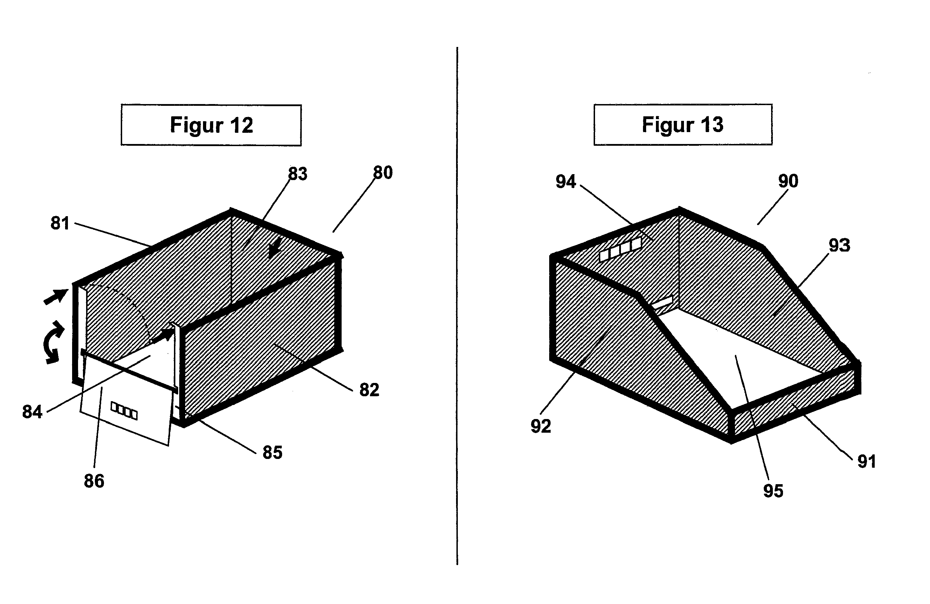

Bei den bisherigen Ausführungsbeispielen wurden die Waren 45 meist direkt ohne jeden weiteren Behälter in das Regalversorgungsfahrzeug bzw. in das Verkaufsregal eingestellt. Alternativ ist es jedoch auch möglich, einen kombinierten Transport- und Präsentationsbehälter 80, wie er in der Figur 12 gezeigt ist, oder einen reinen Präsentationsbehälter 90, wie in der Figur 13 gezeigt, zu verwenden.

Der Transportbehälter 80 kann zusammenklappbare Seitenwände aufweisen, die beispielsweise auf den Boden 84 geklappt werden können, um einen Platz sparenden Rücktransport der Transportbehälter zu gewährleisten. Darüber hinaus kann jedoch der kombinierte Transport- und Präsentationsbehälter 80 zusätzlich an einer Seite eine Präsentationsklappe 86 aufweisen, die einen Teil der Seite 85 frei gibt. Zusätzlich kann jedoch die Seitenwand 85 ebenso einklappbar auf den Boden 84 gestaltet sein.

Bei dem reinen Präsentationsbehälter 90 ist eine Seitenwand 91 sehr reduziert und zwar bis auf eine schmale Anschlagleiste. Die benachbarten Seiten 92 und 93 weisen Abschrägungen auf, um die Darstellung der Produkte noch weiter zu vereinfachen. Lediglich die Rückwand 94 ist vergleichbar zu einer Seitenwand des Transportbehälters 80 gestaltet.

Bei Verwendung eines Präsentationsbehälters ist in dem Einzelhandelsgeschäft, beispielsweise einem Supermarkt, ein Umpacken der Waren aus dem Transportbehälter, mit dem sie angeliefert werden, in den Präsentationsbehälter 90, mit dem sie im Regal präsentiert werden, nötig.

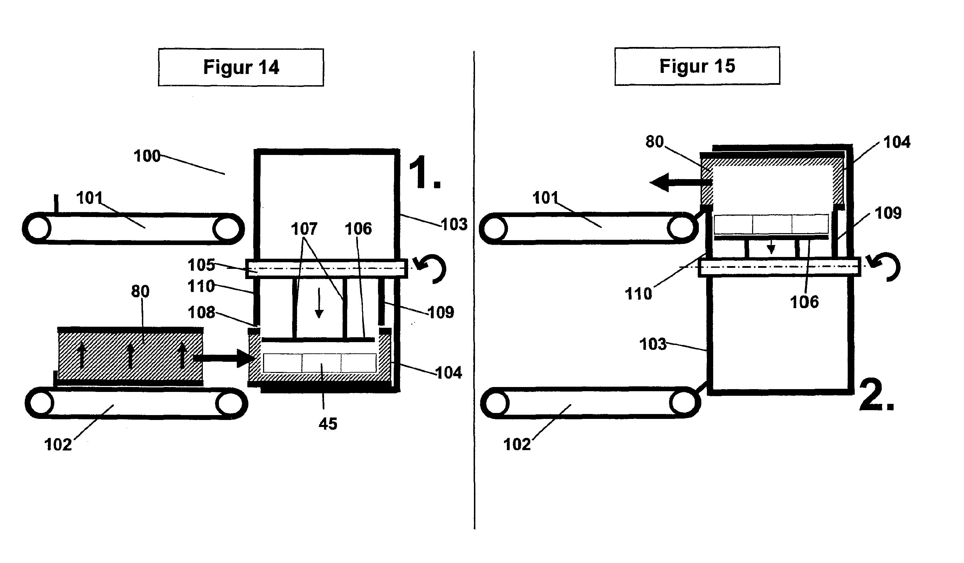

Dazu ist eine Umpackstation 100 vorgesehen, die in zwei Ebenen Schiebevorrichtungen 101 und 102 innerhalb einer Transportvorrichtung, beispielsweise eines Rollenförderers (nicht gezeigt), aufweist. Den Verschiebeeinrichtungen 101 und 102 ist ein Wendemodul 103 zugeordnet, welches eine Aufnahme 104 in Form eines quaderförmigen Gehäuses aufweist, das wiederum in Bezug zu den Schiebeeinrichtungen 101,102 eine Öffnung 108 zur Aufnahme eines Transportbehälters 80 aufweist. Sobald der Transportbehälter 80 mit den darin befindlichen Waren in der Aufnahme 104 des Wendemoduls 103 angeordnet ist, fährt eine Auflage 106 mit entsprechenden teleskopierbaren Stützen 107 in Richtung der Waren 45, um die Waren 45 in ihrer Lage zu stabilisieren. Danach wird das Wendemodul wie in Figur 15 gezeigt ist, um 180° verschwenkt, so dass der Transportbehälter 80 nunmehr auf dem Kopf steht. Die teleskopierbaren Stützen 107 werden dann eingefahren, so dass die Waren 45 auf der Auflage 106 aus dem Behälter 80 entnommen werden, der auf der Behälterstütze 109 sowie der Außenwand 110 der Aufnahme 104 gelagert ist. Nunmehr kann, wie der Pfeil in Figur 15 andeutet, der Transportbehälter 80 aus der Aufnahme 104 entnommen werden, wobei die Schiebeeinrichtung 101 nunmehr als Zugeinrichtung fungiert.

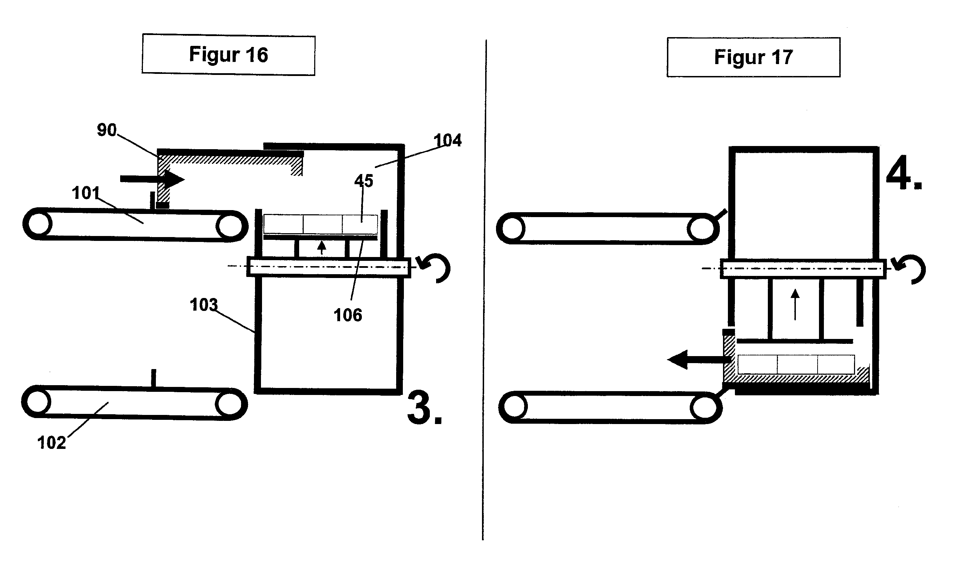

Nachdem der Transportbehälter 80 von der nicht gezeigten Fördereinrichtung abtransportiert worden ist, kann der Präsentationsbehälter 90 zugeführt werden und über die Verschiebeeinrichtung 101 in den Aufnahmeraum 104 des Wendemoduls 103 eingeführt werden. Die Auflage 106 wird dann, wie die Figuren 16 und 17 andeuten, über die teleskopierbaren Stützen 107 nach oben gefahren, so dass die Waren 45 in dem Präsentationsbehälter 90 angeordnet werden. Nach einer weiteren Drehung des Wendemoduls 103 um 180° kann dann der mit den Waren befüllte Präsentationsbehälter 90 von der Schiebe-und Zugeinrichtung 102 aus dem Aufnahmeraum 104 des Wendemoduls 103 entnommen werden, um der zugeordneten Fördereinrichtung (nicht gezeigt) übergeben zu werden.

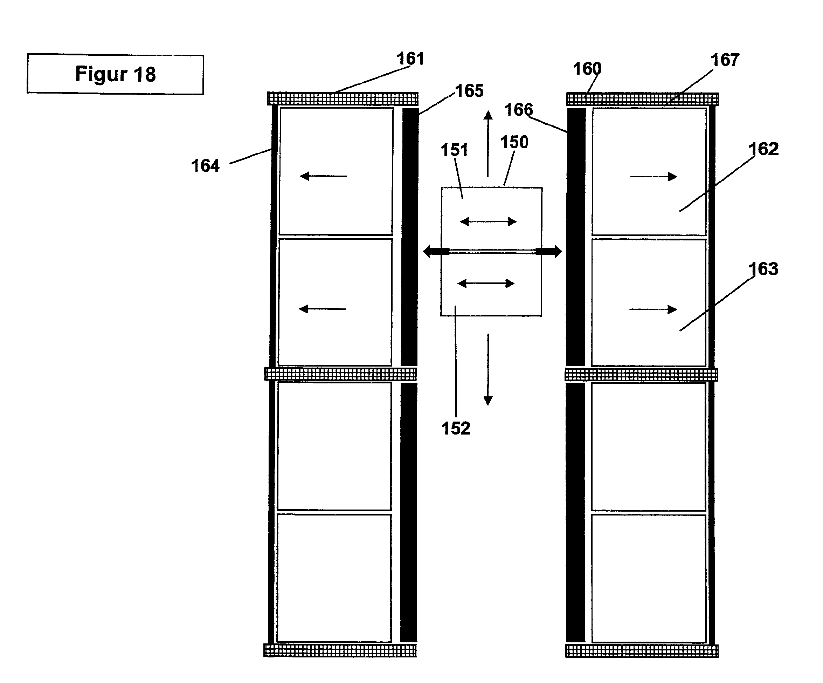

Die Figur 18 zeigt in einer Draufsicht eine schematische Anordnung von zwei Verkaufsregalen 160 und 161, die zwischen sich eine Versorgungsgasse bilden, in der das Regalversorgungsfahrzeug 150 entsprechend den Pfeilen hin und her bewegt werden kann. Das Regalversorgungsfahrzeug 150 weist zwei Transportbänder 151 und 152 auf, mit denen darauf angeordnete Waren in die Regale 160 und 161 übergeben werden können.

Die Regale 160 und 161 weisen in einem vorgegebenen Rastermaß Regalsteher 167 auf, zwischen denen die Regalböden angeordnet sind.

Bezüglich der Regalböden können gleiche oder unterschiedliche Transportbänder 162 und 163 in einer unterschiedlichen Anzahl angeordnet sein, um flexible Facheinteilungen in den Regalen 160 und 161 zu bilden. Da das Regalversorgungsfahrzeug 150 an jeder beliebigen Stelle des Regals 160 bzw. 161 positioniert werden kann, ist eine sehr flexible Facheinteilung möglich. Auf einem Regalboden können mehrere Artikel einsortiert, d. h. flexible Regalfächer gebildet werden.

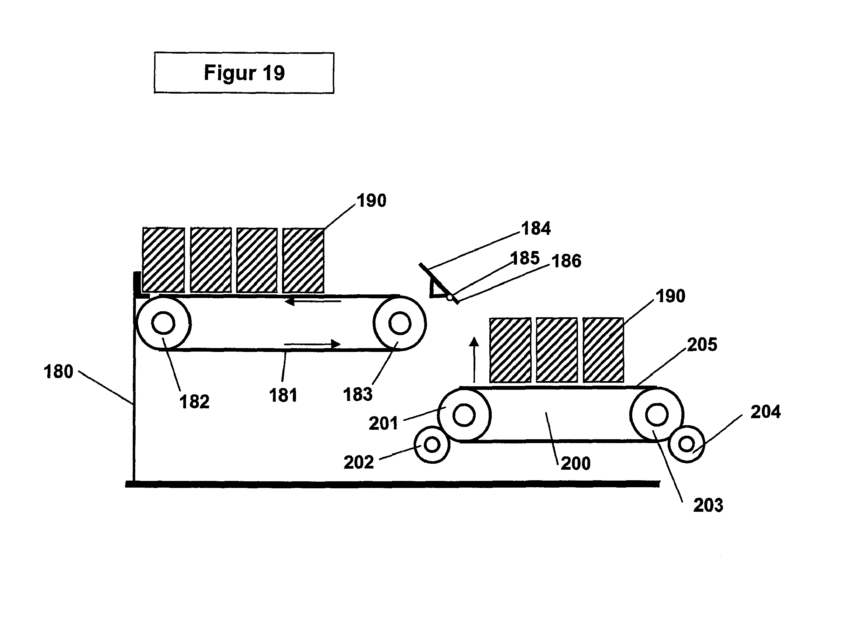

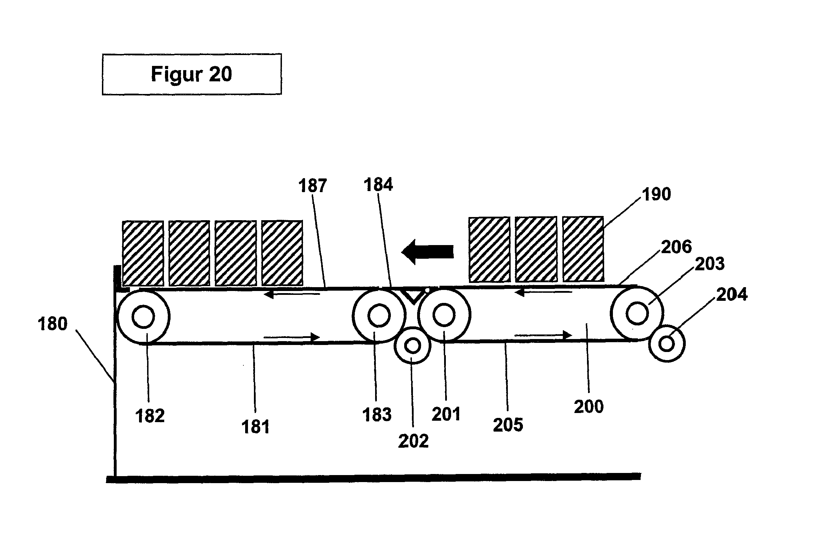

Zur Absicherung der in den Regalen befindlichen Ware, beispielsweise gegen ein Nach-Hinten-Drücken durch Kunden von der Verkaufsseite 164, sind an den Regalrückseiten 165 Absturzsicherungen 166 vorgesehen, die insbesondere beweglich angeordnet sind, um eine Beladung der Regal von der Rückseite zu ermöglichen. Während des Beladens werden dann die Absturzsicherungen 166 wegbewegt, wie insbesondere auch die Figuren 19 und 20 zeigen.

In den Figuren 19 und 20 sind weitere Ausführungsformen eines Verkaufsregals 180 und eines zugeordneten Regalversorgungsfahrzeuges 200 in einer schematischen Seitenansicht gezeigt. Das Regal 180 weist eine Vielzahl von Regalböden bzw. Verkaufsflächen auf, die einen umlaufenden Gurt bzw. ein umlaufendes Transportband 181 aufweisen, das in dem gezeigten Ausführungsbeispiel über Rollen 182 und 183 geführt ist. Auf diese Weise können die in dem Verkaufsfach angeordneten Waren 190 in einfacher Weise an die Verkaufsseite nachgeführt werden, welche in der Figur 19 auf der linken Seite ist.

Auf der Rückseite des Regals 180 ist eine Absturzsicherung 184 vorgesehen, die über einen Drehpunkt 185 dreh- bzw. schwenkbar gelagert ist. In dem gezeigten Zustand der Figur 19 ist die Absturzsicherung 184 aktiv, so dass bei einem unbeabsichtigten Drehen des Transportbandes 181 in die verkehrte Richtung bzw. bei einem Drücken oder Schieben der Verkaufsgegenstände 190 in Richtung der Rückseite des Verkaufsregals 180, die Verkaufsgegenstände 190 am Herabfallen gehindert werden, da sie gegen die Absturzsicherung 184 anschlagen, welche in Form einer drehbaren Leiste vorgesehen ist. Das Regalversorgungsfahrzeug 200, welches ebenfalls Verkaufsgegenstände 190 geladen hat, um diese in ein Verkaufsfach nachzuliefern, weist ebenfalls ein Transportband 205 auf, welches um die Rollen 201 und 203 drehbar geführt ist. Zusätzlich sind den Rollen 201 und 203 Antriebsrollen 202 und 204 zugeordnet, die das Transportband 181 der Regalfächer antreiben können. Beim Regalversorgungsfahrzeug 200 können entweder eine oder beide der Rollen 201 und 203 oder/und der Antriebsrollen 202 und 204 durch einen Elektromotor angetrieben sein.

Wird das Regalversorgungsfahrzeug 200, wie in Figur 20 gezeigt ist, von unten an das Verkaufsfach herangeführt, so dass die Transportfläche 206 fluchtend zur Lagerfläche 187 des Verkaufsregals 180 ausgerichtet ist, wird die Absturzsicherung 184 durch Anschlag der Rolle 201 oder eines zugeordneten Bauteils an dem Fortsatz 186 um die Drehlagerung 185 gedreht, so dass der Spalt zwischen der Transportfläche 206 und der Lagerfläche 187 im Verkaufsregal 180 geschlossen wird. Gleichzeitig kommt die Antriebsrolle 202 in Anlage an die Rolle 183, so dass bei einem entsprechenden Antrieb der Rolle 201 unmittelbar durch einen Elektromotor oder über das Transportförderband 205 auch die Antriebsrolle 202 angetrieben wird, welche wiederum die Rolle 183 und damit das Transportband 181 des Regals 180 antreibt. Wie mit einem Pfeil angedeutet, bewegen sich dann die Verkaufsgegenstände 190 in das Verkaufsregal.

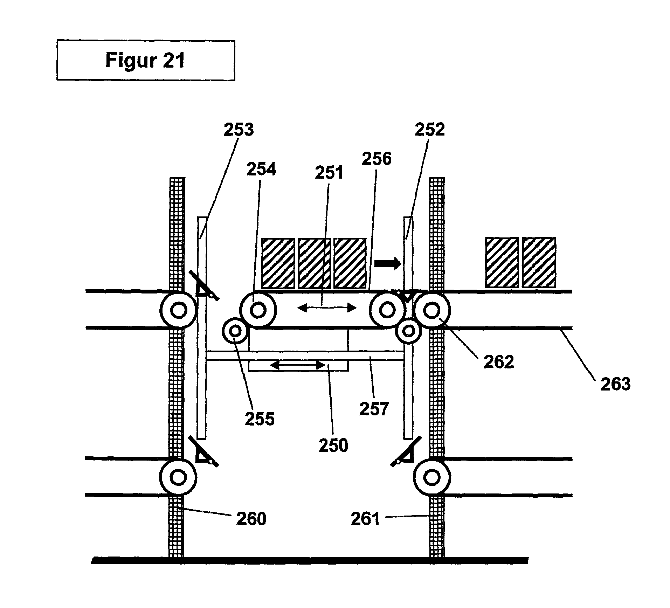

Die Figur 21 zeigt eine weitere schematische Seitenansicht eine Regalversorgungsfahrzeuges 250 in einer Versorgungsgasse zwischen zwei Regalen 260 und 261. Das Regalversorgungsfahrzeug 250 weist längliche Stützelemente 252 und 253 auf, die entweder über eine Teleskoplagerung 257 oder sonstige geeignete Bewegungsmittel gegenüber dem Regalversorgungsfahrzeug 250 bewegbar sind, so dass sie in Anlage an die gegenüberliegenden Regale 260 und 261 gelangen und abstützen können.

Zusätzlich kann der Tisch 251 mit der Transportfläche bzw. den Rollen 254 und 255 bzw. dem Transportband 256 in Richtung eines Regals, hier beispielsweise das Regal 261, bewegt werden, um auch hier wieder in Anlage mit der Rolle 262 und dem Transportband 263 des Verkaufsfaches zu gelangen, so dass die Waren von dem Regalversorgungsfahrzeug 250 auf das Transportband 263 des Regalfaches übergehen können.

Durch das Verklemmen des Regalsversorgungsfahrzeugs 250 in der Versorgungsgasse zwischen den Regalen 260 und 261 kann eine ortsfeste Lagerung insbesondere in horizontaler Richtung während des Übergabevorgangs gewährleistet werden. Insbesondere ist es vorteilhaft, wenn eines oder mehrere Abstützelemente 253 an einer Seite des Regalversorgungsfahrzeugs gegenüberliegend der Übergabeseite während des Übergabevorgangs an dem Regal abgestützt werden. An der Übergabeseite erfolgt die Abstützung bereits durch die kontaktierten Rollen.

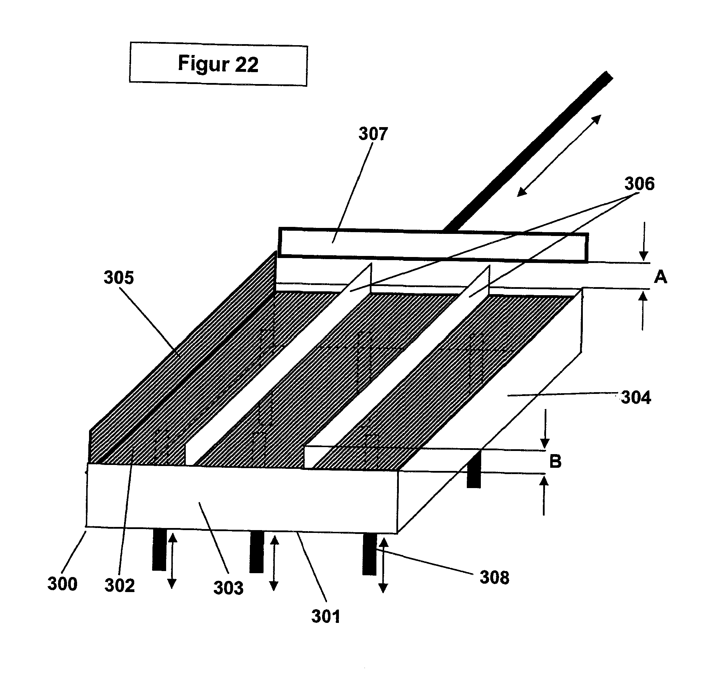

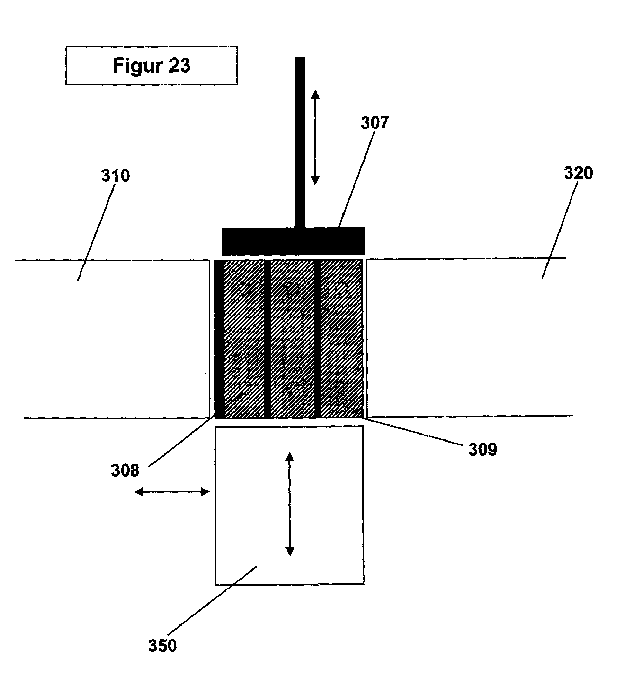

Die Figuren 22 und 23 zeigen ein Übergabesystem bzw. eine Übergabestation, wie sie beispielsweise im Hauptversorgungsweg 3 an den Übergabestationen 8, 9, 10 und 11 verwirklicht sein kann.

Das Übergabesystem umfasst einen auf dem Transportweg verfahrbaren Behälter 300 von einer quaderförmigen Grundstruktur mit einem Boden 301 und umgebenden Seitenwänden 303 und 304. Auf dem Boden 301 ist ein weiteres Bodenteil 302 eingelegt, so dass sich eine doppelte Bodenausbildung mit einem losen, frei beweglichen Bodenteil 302 gibt.

Das obere Bodenteil 302 kann durch Aushubdorne 308 einer Übergabestation 309 soweit angehoben werden, dass die Oberseite des oberen Bodenteils 302 über die Seitenwände 303 und 304 hervorsteht oder mit deren Oberseiten fluchtend ausgerichtet ist.

In dem gezeigten Ausführungsbeispiel sind an der Oberseite des oberen Bodenteils 302 zusätzlich Leisten 306 vorgesehen, die zusammen mit einer hochgezogenen Seitenwand 305 des Behälters oder des oberen Bodenteils Führungselemente für einen Schiebevorgang der auf dem oberen Bodenteil 302 angeordneten Waren bilden. Die Leisten können insbesondere quer zur Schieberichtung des Schiebers 307 verstellbar angeordnet sein, um unterschiedliche Waren aufzunehmen. Die Waren, wie beispielsweise lose Flaschen, Dosen und dergleichen können dann mit dem Schieber 307 von dem oberen Bodenteil 302 auf eine benachbarte Abstellfläche geschoben werden, wie sie beispielsweise in Figur 23 mit dem Bezugszeichen 350 dargestellt ist, wobei diese Abstellfläche vorzugsweise mit der angetriebenen Transportfläche eines Regalversorgungsfahrzeugs identisch ist. Es ist aber auch vorstellbar andere Abstellflächen vorzusehen.

Wie die Figur 23 weiterhin zeigt, ist die Übergabestation 309 in einem Transportweg integriert, beispielsweise dem Hautversorgungsweg 3, wobei dieser durch benachbarte Rollenförderer 310 und 320 gebildet wird. Selbstverständlich sind auch andere Transportmittel hier vorstellbar.

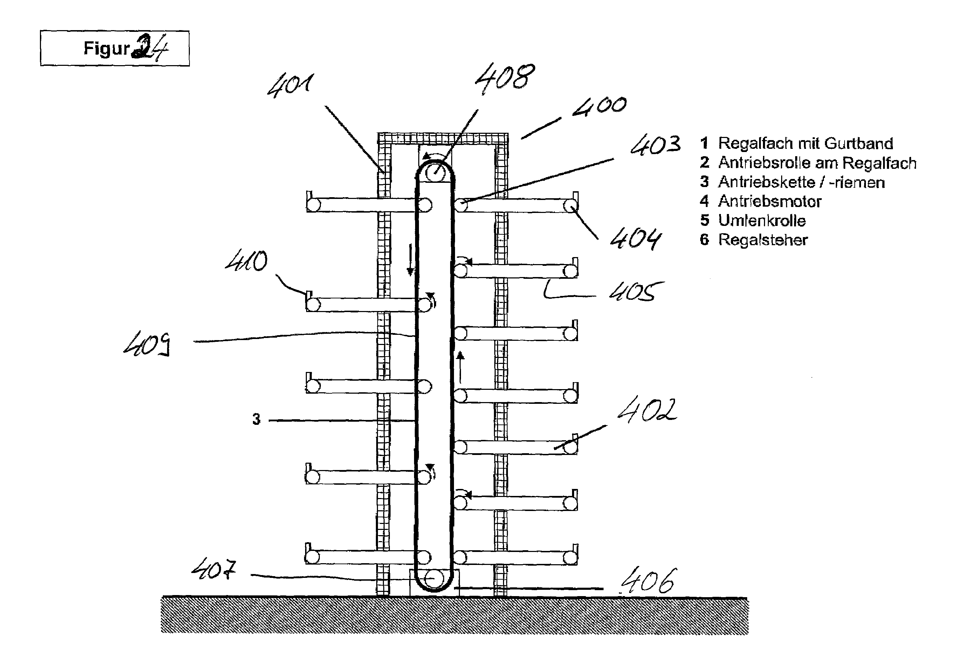

Die Figur 24 zeigt ein Verkaufsregal 400, welches ein Gestell 401 aufweist, an dem beidseitig eine Vielzahl von Regalböden 405 angeordnet sind. Die Regalböden weisen jeweils ein nicht näher dargestelltes Transportband auf, welches um die an den Stirnseiten der Regalböden 405 angeordneten Antriebsrolle 403 und Umlenkrolle 404 geführt sind.

An der Verkaufsseite weisen die Regalböden 405 eine Anschlagleiste 410 auf, die beim automatischen Nachführen der Verkaufsware durch die Transportbänder ein Herabfallen der Ware verhindern.

Im Innenraum oder an der Seite des Gestells 401 ist der Antrieb für die Regalböden 405 bzw. deren Transportbänder vorgesehen, welcher einen Elektromotor 406 sowie einen Antriebsriemen 409 umfasst. Der Antriebsriemen 409 ist in Form eines Endlosbandes um die Antriebswelle 407 des Elektromotors 406 und die gegenüberliegend an der Oberseite des Gestells angeordnete Umlenkwelle 408 geführt.

Der Antriebsriemen 409, der alternativ auch als Antriebskette oder in einer vergleichbaren Ausführungsart ausgebildet sein kann, liegt an den Antriebrollen 403 an der Innenseite der Regalböden 405 an und treibt diese entsprechend an. Um einen Transport des Transportbandes an der Oberseite der Regalböden 405 nach außen zu gewährleisten, liegt der Antriebsriemen 409 auf der einen Seite an der Außenseite der Antriebsrollen 403 an, während er auf der gegenüberliegenden Seite mit umgekehrter Bewegungsrichtung an der Innenseite der Antriebsrollen 403 vorgesehen ist. Um einen guten Anpressdruck des Antriebsrahmens an die Antriebsrollen 403 der Transportbänder zu erzielen, können entsprechende Gegenrollen, insbesondere federgelagerte Gegenrollen vorgesehen sein, die der Einfachheit halber nicht dargestellt sind.

Mit dem Verkaufsregal der Fig. 24 ist es möglich einen ständigen Nachschub der Waren an die Vorderseite bzw. Verkaufsseite der Regalböden 405 zu gewährleisten. Dazu muss der Elektromotor 406 über den Antriebsriemen 409 lediglich für einen langsamen Transport des Transportbandes auf den Regalböden 405 in Richtung Verkaufsseite sorgen. Hierbei kann eine extrem langsame Geschwindigkeit gewählt werden, so dass ein ständiger Transport eingestellt werden kann.

Darüber hinaus ist es auch möglich, den Antrieb nur zeitweise, insbesondere intervallartig, oder nach Anforderung einer entsprechenden Steuerung oder Regelung zu betreiben.

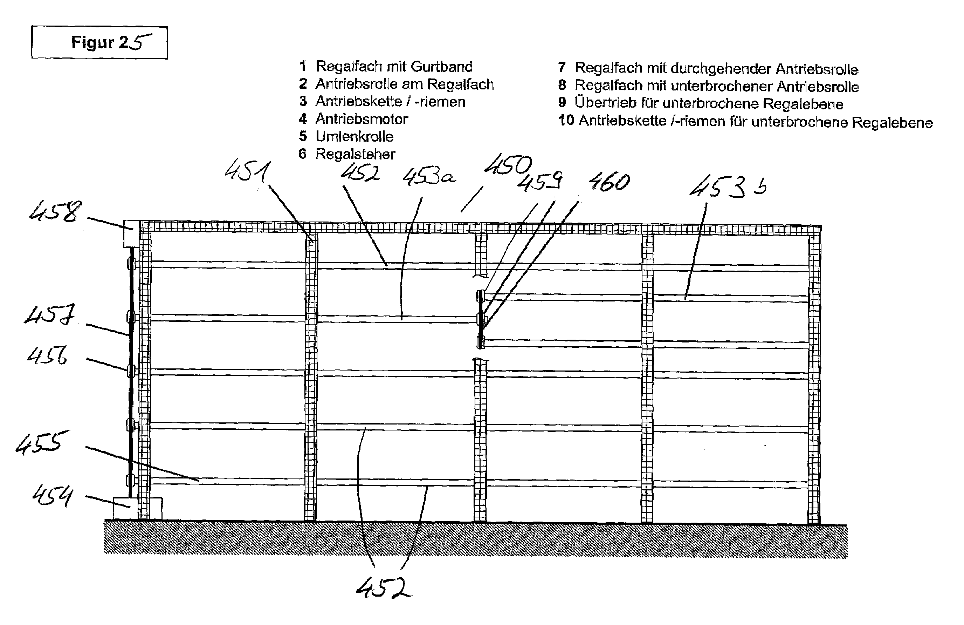

Die Fig. 25 zeigt einen weitere Ausführungsform eines Verkaufsregals 450, bei dem in einem Gestell 451 verschiedene Regalfächer bzw. -böden 452 und 453a,b angeordnet sind.

Während die Regalböden 452 jeweils eine Antriebswelle 455 aufweisen, die über die gesamte Länge des Verkaufsregals angeordnet ist, ist die Antriebswelle der Regalfächer 453a,b lediglich für einen Teilbereich des Verkaufsregals angeordnet.

Um auch hier den Antrieb der Transportbänder aller Regalfächer bzw. Regalböden über einen zentralen Antrieb zu gewährleisten, ist ein so genannter Übertrieb, der durch die Antriebsräder 459 und das Endlosband 460 gebildet ist, vorgesehen. Jeweils an benachbarten Regalböden 453a und 453b ist an den entsprechenden Antriebsrollen ein Antriebsrad 459 vorgesehen, über welche das Endlosband 460 verläuft, so dass der Antrieb der ersten Antriebsrolle des Regalbodens 453a auf die Antriebsrolle des Regalbodens 453b übertragen werden kann.

Die Antriebsrolle des Regalbodens 453a wird über einen Elektromotor 454 und eine endlose Antriebskette 457 bewerkstelligt, welche in Antriebsräder 456 der Antriebsrollen der jeweiligen Regalböden eingreift. Die Antriebskette 457 wird über eine eingehauste Umlenkwelle 458 geführt.

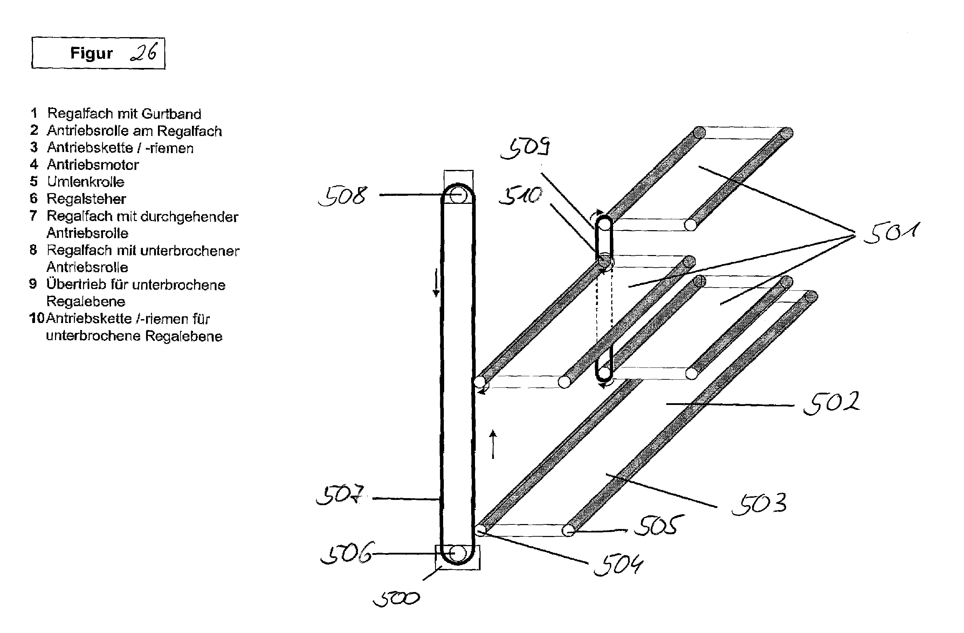

Die Fig. 26 zeigt in einer weiteren Darstellung einen Antrieb für ein erfindungsgemäßes Verkaufsregal, bei welchem wiederum ein Antriebsriemen 507 über die Antriebswelle 506 eines Elektromotors 500 und einen Umlenkwelle 508 in einer Endlosschleife geführt wird. In dem Verkaufsregal, für welches der Antrieb der Figur 26 vorgesehen ist, sind kurze Regalböden 501 und lange Regalböden 502 vorgesehen, wobei der Antrieb mit dem Antriebsriemen 507 sowohl die Antriebsrollen 504 als auch 510 der kurzen 501 bzw. langen 502 Regalböden antreibt.

Durch den Antrieb der Antriebsrolle 504 wird das Transportband 503, welches als Endlosschleife um die Antriebsrolle 504 und die Umlenkrolle 505 des Regalbodens 502 geführt ist, angetrieben, um die Verkaufsware in Richtung der Verkaufsseite zu fördern. In gleicher Weise wird die Antriebsrolle 510 des kurzen Regalbodens 501 angetrieben, um auch dort das Transportband mit den Waren entsprechend zu bewegen. Die übrigen kurzen Regalböden 501, die nicht in Anlage zu dem Antriebsriemen 507 stehen, werden über einen so genannten Übertrieb in Form eines endlosen Übertriebriemens 509 von der angetriebenen Rolle 510 angetrieben, so dass auch hier ein zentraler Antrieb zur Bewegung aller Transportbänder in den verschiedenen und unterschiedlich angeordneten Regalböden 501 und 502 genügt. Der Antrieb erfolgt hierbei an den an der Innenseite bzw. Rückseite des Verkaufsregals angeordneten Rollen, während die übrigen Rollen an der Verkaufsseite lediglich als Umlenkrollen dienen. Alternativ könnten deshalb die Umlenkrollen auch gegen andere Gleitelemente ausgetauscht werden.

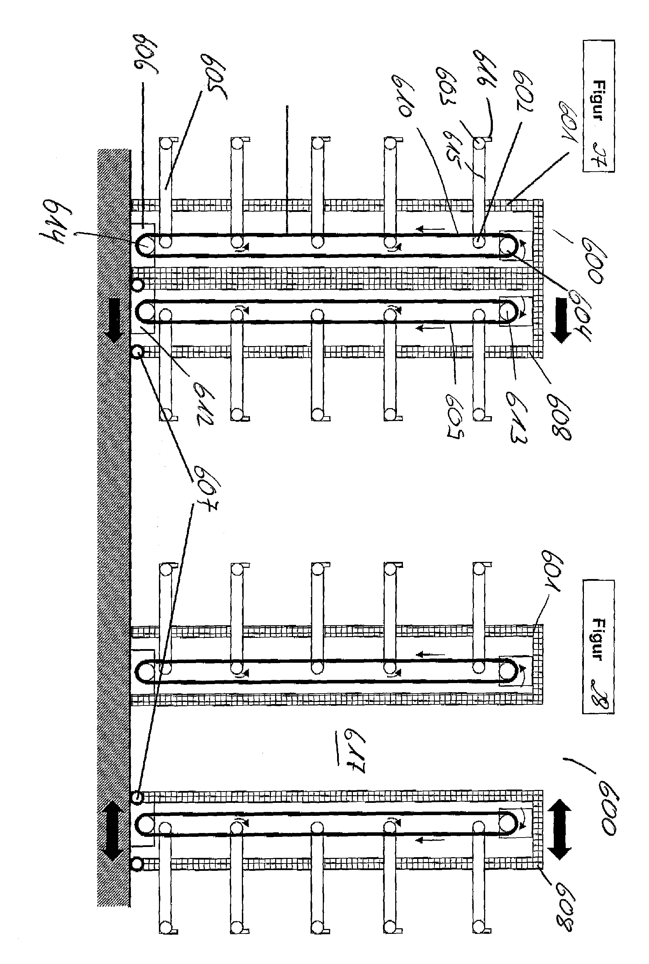

Die Figuren 27 und 28 zeigen ein weiteres Verkaufsregal 600, welches die Teile 601 und 608 umfasst, die für sich separat wiederum selbständig Verkaufsregale bilden.

Die Teile 601 und 608 weisen jeweils ein Gestell auf, in dem Regalböden 605 mit entsprechenden Transportbändern 615 vorgesehen sind, die um einen Antriebsrolle 602 und einen Umlenkrolle 603 geführt sind. An der jeweiligen Verkaufsseite sind an den Regalböden 605 Anschlagleisten 616 vorgesehen, um wiederum ein Herabfallen von an die Verkaufsseite geförderten Waren zu verhindern. Die Antriebsrollen 602 werden durch einen Antriebsriemen 610 angetrieben, der in einer Endlosschleife um die Umlenkwelle 604 und die Antriebswelle 614 des Elektromotors 606 geführt ist.

Jedes Teil 601 und 608 weist einen separaten Antrieb für seine Regalböden auf, wobei der Antrieb des Regalteils 608 den Motor 612, den Antriebsriemen 609 und die Umlenkwelle 613 umfasst.

Wie insbesondere ein Vergleich der Figuren 27 und 28 zeigt, ist das Regalteil 608 durch die unten am Gestell angeordneten Rollen oder Räder 607 verfahrbar ausgestaltet, so dass das Regalteil 608 entsprechend der in den Figuren 27 und 28 dargestellten Pfeile verfahrbar ist. Dies kann sowohl manuell als auch über eine Antriebseinrichtung (nicht gezeigt) erfolgen. Durch die Bewegung des Regalteils 608 wird ein Zwischenraum 617 zwischen den Regalteilen 601 und 608 geschaffen, so dass eine Nachschubgasse zur Bestückung der Verkaufsregale mit Ware von hinten geschaffen wird. Damit ist es möglich, die Verkaufsregale nach dem "First In First Out"-Prinzip zu bestücken, ohne beim Nachfüllen mit frischer Ware, sämtliche Ware aus dem Verkaufsregal entnehmen zu müssen.

Insbesondere durch die Gestaltung des Antriebs bzw. der Antriebe für die Transportbänder der Regalböden mit entsprechenden Freilaufeinrichtungen ist es möglich, ein vorher beschriebenes Regalversorgungsfahrzeug zum automatischen Bestücken und Nachführen der Ware einzusetzen oder das Verkaufsregal unabhängig von dem Nachführungszustand der Ware auch manuell beladen zu können.

Obwohl das Verkaufsregal 600 in den Figuren 27 und 28 so dargestellt ist, dass nur ein Teil, nämlich das Teil 608 verfahrbar ist, könnte eine weitere Ausführungsform vorsehen, dass beide Teile, also die Regalteile 601 und 608 verfahrbar sind.

Die gezeigten Ausführungsbeispiele zeigen vorteilhafte Realisierungen des Erfindungsgedankens, ohne diesen auf diese Ausführungsformen beschränken zu wollen. Vielmehr kann gemäß dem Umfang der nachfolgenden Patentansprüche auch eine Vielzahl weiterer Ausführungsformen der vorliegenden Erfindung realisiert werden, wobei insbesondere Kombinationen und/oder das Weglassen einzelner Merkmale der gezeigten Ausführungsbeispiele denkbar sind. Insbesondere umfasst die vorliegende Erfindung sämtliche Kennzeichen einzeln und in Kombination untereinander.

## Patentansprüche

1. Vorrichtung zum Transport von Verkaufsware in ein und/oder in einem Verkaufsregal, mit einem Transportweg von einem Anlieferbereich und/oder einem automatisierten Kleinteilelager (AKL) zu dem Verkaufsregal und einem Regalversorgungsfahrzeug, welches auf dem Transportweg (3,4,5,6,7) verfahrbar ist und die Ware aufnimmt und automatisiert an das Verkaufsregal übergibt und/oder das Nachschieben der Waren verursacht.

2. Vorrichtung nach Anspruch 1,
**dadurch gekennzeichnet, dass**
der Transportweg in Form von einem oder mehreren Transportschleifen, insbesondere Endlosschleifen ausgebildet ist, welche insbesondere durch Übergabestellen für die Waren miteinander verbunden sind, und/oder jede Transportschleife mindestens ein oder mehrere fest zugeordnete Transportfahrzeuge umfasst.

3. Vorrichtung nach einem der vorhergehenden Ansprüche,
**dadurch gekennzeichnet, dass**
der Transportweg eine Hauptversorgungsschleife (3) und ein oder mehrere Regalversorgungsschleifen (4,5,6,7) umfasst und/oder der Transportweg einen Zwischenlagerbereich umfasst.

4. Vorrichtung nach einem der vorhergehenden Ansprüche,
**dadurch gekennzeichnet, dass**
der Transportweg, insbesondere in Form von Regalversorgungsschleifen zumindest teilweise zwischen zwei Verkaufsregalen hindurch führt, wobei die Verkaufsregale von der Transportweggasse (13) her bestückt werden können.

5. Vorrichtung nach einem der vorhergehenden Ansprüche,
**dadurch gekennzeichnet, dass**
das Regalversorgungsfahrzeug eine Transportfläche (29) zur Aufnahme der Ware, Bewegungsmittel (20) zur Bewegung des Fahrzeugs und Antriebsmitteln (17,18,38) zum Antrieb der Bewegungsmittel oder des Fahrzeugs aufweist, wobei das Fahrzeug derart hergerichtet ist, dass es entlang eines vorgegebenen Fahrwegs automatisch bewegbar ist und die Transportfläche zweidimensional entlang zweier Richtungen der Raumkoordinaten bezüglich des Regals ausrichtbar ist, und wobei insbesondere der Transportfläche Handhabungsmittel (27) für die auf der Transportfläche (29) abstellbaren Waren zugeordnet sind, wobei mit Hilfe der Handhabungsmittel die Ware parallel zur Transportfläche in Richtung des Regals und umgekehrt verschiebbar ist.

6. Vorrichtung nach einem der vorhergehenden Ansprüche,
**dadurch gekennzeichnet, dass**
das Verkaufsregal ein Gestell und einen oder mehrere darin gelagerten Regalböden (51) mit einer an der Oberseite der Regalböden vorgesehenen Lagerfläche zur Aufnahme der Waren umfasst, wobei das Verkaufsregal zumindest an einer Stirnseite der Regalböden eine Verkaufs seite aufweist, an der die Kunden die Ware zum Kauf entnehmen können, und wobei die Regalböden ein oder mehrere Transportbänder (60) aufweisen, welche oberhalb der Lagerfläche auf der Oberseite der Regalböden vorgesehen sind und in einer Endlosschleife über die Stirnseiten und die Unterseite der Regalböden geführt sind.

7. Vorrichtung nach Anspruch 6,
**dadurch gekennzeichnet, dass**
das Regalversorgungsfahrzeug mit einem Antrieb, insbesondere einem Antriebsrad oder einer Antriebswelle oder -rolle ausgestattet ist, mittels dem das Transportband des Regalbodens des Verkaufsregals angetrieben werden kann.

8. Vorrichtung nach einem der vorhergehenden Ansprüche,
**dadurch gekennzeichnet, dass**
mindestens eine Steuer- und /oder Regelungseinheit vorgesehen ist, die die Vorrichtung und insbesondere die Beladung der Regalversorgungsfahrzeuge, die Bewegung der Regalversorgungsfahrzeuge, ihre Entladung und Beladung der Regale und/oder das Nachführen der Waren in den Regalen steuert oder regelt.

9. Vorrichtung nach einem der vorhergehenden Ansprüche,
**dadurch gekennzeichnet, dass**
eine oder mehrere Erfassungseinheiten, insbesondere Scanner und Kameras, vorgesehen sind, die die Art, die Menge und/oder die Position der Waren insbesondere in den Regalen erfassen und insbesondere für das Nachschieben oder Nachführen der Waren an die Verkaufsseite an die Steuer- und/oder Regelungseinheit übermitteln.

10. Vorrichtung nach einem der vorhergehenden Ansprüche,
**dadurch gekennzeichnet, dass**
der Transportweg zwischen zwei verfahrbaren Regalteilen (601,608) vorgesehen ist.

11. Vorrichtung nach einem der vorhergehenden Ansprüche,
**dadurch gekennzeichnet, dass**
das Regalfahrzeug mindestens ein, vorzugsweise mehrere, insbesondere bewegliche Abstützelemente zum insbesondere seitlichen Abstützen gegenüber Wänden, Regalen und dergleichen bei der Übergabe der Ware an ein Regal, insbesondere zum Einklemmen des Regalversorgungsfahrzeuges zwischen gegenüberliegenden Regalen vorgesehen sind.

12. Vorrichtung nach einem der vorhergehenden Ansprüche,
**dadurch gekennzeichnet, dass**
die Vorrichtung eine Umpackstation zum Umpacken von Waren aus Transport- in Präsentationsbehälter umfasst, wobei die Umpackstation ein Wendemodul (103)umfasst, welches mindestens eine, vorzugsweise zwei gegenüberliegende Aufnahmen (104) für Transport- und Präsentationsbehälter umfasst, wobei an einer Seite der Aufnahme, insbesondere zwischen den einander gegenüber liegenden Aufnahmen eine Drehachse (105) angeordnet ist, so dass die Aufnahme auf den Kopf gedreht werden kann, und wobei in jeder Aufnahme eine verstellbare Auflage vorgesehen ist, die die Waren vor dem Drehen an der Oberseite hält und nach dem Drehen für die Waren eine Auflage bildet.

13. Vorrichtung nach einem der vorhergehenden Ansprüche,
**dadurch gekennzeichnet, dass**
die Vorrichtung ein Übergabesystem für die Übergabe von losen Waren oder Gegenständen, wie Flaschen, Dosen und dergleichen aus einem Transportbehälter auf eine Abstellfläche, insbesondere die Transportfläche (29) eines Regalversorgungsfahrzeugs (15) umfasst, wobei das Übergabesystem einen Transportbehälter mit einem doppelten Boden, wobei der obere Teil des Bodens frei beweglich und/oder lose in den Behälter eingelegt ist, und eine Hubvorrichtung aufweist, die derart ausgestaltet ist, dass das obere Bodenteil durch die Hubeinrichtung vorzugsweise mit Dornen im Behälter angehoben werden kann, wobei der Hubvorrichtung eine Schiebeanordnung zugeordnet ist, die einen Schieber zum Bewegen der auf dem oberen Bodenteil angeordneten Gegenstände aufweist, und wobei der Behälter und/oder die Schiebeanordnung Führungselemente für die zu schiebenden Gegenstände aufweisen.

14. Verfahren zum Betrieb einer Vorrichtung nach einem der Ansprüche 1 bis 13,
**dadurch gekennzeichnet, dass**
die Waren in den Verkaufsregalen automatisch nachgeführt werden, insbesondere durch das Regalfahrzeug.

15. Verfahren nach Anspruch 14,
**dadurch gekennzeichnet, dass**
die Waren automatisch, insbesondere außerhalb der Geschäftszeiten oder in geschäftsarmen Zeiten in die Regale nachgeliefert werden, insbesondere wenn ein Verkauf einer bestimmten Menge überschritten ist, wobei insbesondere die verkaufte Menge durch an den Kassen gesammelte Daten oder durch Erfassungseinheiten registrierte Daten bestimmt wird.
